# EUROPÄISCHE PATENTANMELDUNG

(11) **EP 4 588 584 A1**
(43) Veröffentlichungstag der Anmeldung: **23.07.2025**
(21) Anmeldenummer: 24152905.6
(22) Anmeldetag: 19.01.2024
(51) Int. Cl.: B09B 3/30, F23G 5/02

(54) **VERFAHREN ZUR AUFBEREITUNG EINER AUSHUBMASSE, AUFBEREITUNGSVORRICHTUNG UND ARBEITSZUG**

(71) Anmelder: Zürcher Holding GmbH, 77974 Meißenheim (DE)
(72) Erfinder: Zürcher, Ralf, 77974 Meißenheim (DE)
(74) Vertreter: mepat Patentanwälte

(57) **Zusammenfassung**

Die vorliegende Erfindung stellt ein Verfahren zur Aufbereitung einer Aushubmasse (A) bereit, die Bauschuttmaterial mit Bodenaushubmaterial und/oder Baumischabfallmaterial und zumindest einen nicht wiederverwendbaren Abfallstoff aufweist. Dabei wird zumindest eine Aufbereitungsbehandlung (S) der Aushubmasse (A) aus einer Gruppe, umfassend Trennen (S1), Waschen (S2) und Brechen (S3), durchgeführt, wobei eine behandelte Aushubmasse (A`) erhalten wird, bei der der nicht wiederverwendbare Abfallstoff in zumindest einer Feinfraktion (F) enthalten ist. Es folgt das Klassieren (K) der behandelten Aushubmasse (A`) in einer Klassierungsvorrichtung (40) zumindest in die Feinfraktion (F) mit dem nicht wiederverwendbaren Abfallstoff und zumindest eine Grobfraktion (G), die arm an oder frei von dem nicht wiederverwendbaren Abfallstoff ist, sodass die Grobfraktion (G) zu einer Wiederverwendung (V) abgeführt wird, Es folgen das Überführen der Feinfraktion (F) in eine Verbrennungsvorrichtung (50) und das Verbrennen (B) des nicht wiederverwendbaren Abfallstoffs der Feinfraktion (F) bei einer Temperatur, die zur Verbrennung des nicht wiederverwendbaren Abfallstoffs ausgewählt ist, wobei aus einem Verbrennungsrückstand eine aufbereitete Feinfraktion erhalten wird, die arm an oder frei von dem zumindest einen nicht wiederverwendbaren Abfallstoff ist. Ferner werden eine zur Durchführung des Verfahrens ausgebildete, insbesondere mobile, Aufbereitungsvorrichtung (10) und ein Arbeitszug (100) offenbart.

## Beschreibung

Die Erfindung betrifft ein Verfahren und eine Aufbereitungsvorrichtung, insbesondere eine mobile Aufbereitungsvorrichtung, zur Aufbereitung einer Aushubmasse und einen Arbeitszug, der zur Aufbereitung einer solchen Aushubmasse auf einem Gleis mit oder zu einer Baustelle verfahrbar ist.

Aus dem Stand der Technik ist bekannt, dass auf Baustellen unterschiedliche Aushubmassen wie Bodenaushub, Bauschutt und Baumischabfall anfallen, die je nach Herkunft und Zusammensetzung in unterschiedlicher Weise entsorgt, d. h. deponiert oder verwertet werden. "Verwertung" umfasst dabei thermische Verwertung (Verbrennen) und Aufbereitung zur Wiederverwendung (Recycling). Ferner kommt es vor, dass Aushubmassen mit umweltschädlichen, z. B. brennbaren, explosiven oder giftigen Schadstoffen wie beispielsweise Ölen, Lacken, Lösungsmitteln, Pestiziden, Chlor- oder Fluorverbindungen etc. kontaminiert sein können, die besondere Herausforderungen an die Entsorgung stellen.

Als Bodenaushub bzw. Erdaushub werden grundsätzlich alle Massen bezeichnet, die aus dem Erdboden ausgehoben werden, der als oberster Teil der Erdkruste definiert ist, unter dem eine feste oder lockere Gesteinsschicht liegt. Die Festphase des Erdbodens weist ein mineralisches Grundgerüst, das Sand, Schluff, Ton und/oder Lehm umfassen kann, mit bindigen bzw. organischen Anteilen auf. Bodenaushubmassen werden üblicherweise auf eine Deponie transportiert und dort ein- bzw. zwischengelagert.

Unter Bauschutt werden recyclingfähige mineralische Abfälle und Baumaterialien wie zum Beispiel Klinkersteine, Backsteine, Natursteine, Kies, Mörtel, Putz, Ziegel, Mauern, Beton, Gesteinsbruch, Straßenbruch, Zement, Mauerwerk, Estrich, aber auch Keramiken, Marmor und Feinsteinzeug verstanden. Bauschutt kann, außer wenn er Erdboden bzw. Sand enthält, aufbereitet und als Recyclingprodukt verwertet werden. Dazu wird der Bauschutt in entsprechenden Anlagen nach Abfall und Wertstoff getrennt. Der Abfall kann auf eine Deponie verbracht oder thermisch verwertet werden und die Wertstoffe können erneut auf dem Markt verfügbar gemacht werden. So werden Materialien wie Beton, Ziegel und Fliesen beispielsweise zu Recyclingbeton oder Straßenbaumaterial aufbereitet. Straßenbruch kann zu Asphaltgranulat verarbeitet werden, das im Straßenbau beigemischt werden kann.

Die Trennung der Bauschuttmassen umfasst überwiegend das Aussortieren einschließlich Siebvorgängen und/oder Zerkleinerungsprozesse in Brechanlagen mit anschließender Fraktionierung in verschiedene Korngrößen. Schadstoffe werden hierbei durch Sortieren und Waschvorgänge oder andere mechanische Schritte ausgesondert und einer Deponie zugeführt. Der beim Waschvorgang ausgesonderte, hoch belastete Restabfall, der alle Verunreinigungen der Aushubmasse (vor Sortierung/Siebung/Brechung/Waschung) konzentriert enthält, ist sehr feinkörnig, mit einem maximalen Korndurchmesser von 1,00 mm. Obwohl auch in diesem Restabfall mineralische Anteile zu finden sind, dürfen/können diese nicht weiter zur Verwendung kommen, sodass eine maximale Recycling-Quote nicht erreichbar ist. Bauschutt, der auch Erdboden bzw. Sand enthält, wird als nicht recyclingfähig betrachtet und durch Deponierung entsorgt.

Zur Sanierung von Gleisbauanlagen ist bekannt, dass die Aushubmassen aus der Schotter- und der darunter liegenden Planumsschutzschicht (PSS) am Ort der Baustelle mit einer auf dem Gleis mobilen Aufbereitungsanlage aufbereitet werden können. So ist aus DE 20 2010 012 355 U1 eine Gleiswegsanierungsmaschine bekannt, die neben zwei Aushubvorrichtungen zum Ausheben der Schotter- und der PSS-Schicht und zwei Einbringungseinheiten für aufbereitete Schotter- und PSS-Materialien (Kies, ggf. mit Zusatzstoffen) diverse Aufbereitungseinheiten für den Schotter- und den PSS-Aushub aufweist. In einer ersten PSS-Aufbereitungseinheit erfolgt das Sieben und/oder Brechen grober Bestandteile des ausgehobenen PSS-Materials, worauf das teilaufbereitete PSS-Material in eine zweite PSS-Aufbereitungseinheit überführt und dort mit einem flüssigen Wiederaufbereitungsfluid gemischt wird. Die in der ersten PSS-Aufbereitungseinheit ausgesiebten, verschmutzen Anteile unterhalb einer für die PSS bestimmten Korngröße werden zur Endlagerung in einen Bunkerwagen und nicht in die zweite PSS-Aufbereitungseinheit überführt. Das ausgehobene Schottermaterial wird in einer Brecheranlage geschärft und einer Siebung unterzogen, um den aufbereiteten Schotter von den Schotteranteilen zu trennen, die eine für den Schotter vorbestimmte Mindestgröße unterschreiten. Diese Feinfraktion kann der PSS-Aufbereitungseinheit zugeführt werden.

Aushubmassen, die Baumischabfall enthalten, werden hauptsächlich durch Verbrennung oder Deponierung entsorgt, da Baumischabfall neben recyclingfähigen Baumaterialien wie beispielsweise Glas, Holz, Metalle, auch nicht recyclingfähige Leichtbaustoffe wie Bims, Gips, Porenbeton, geschäumte und ungeschäumte Kunststoffe (von Dämmstoffen, Isolierung, Kabeln, Rohren, Folien) in nicht oder nur kaum recyclebaren Mischungen umfasst.

Bei der thermischen Verwertung werden die Aushubmassen einer Verbrennungsanlage zugeführt und verbrannt. Verbrennungsanlagen für mineralische Baustoffe sind für sehr hohe Durchsatzmengen von bis zu 10 t/h ausgelegt, um wirtschaftlich zu arbeiten, und finden sich meist an zentralen Stellen eines Landes, sodass ggf. lange Anfahrtswege von einer Baustelle zurückzulegen sind. Allerdings ist die Verbrennung nur dann wirtschaftlich, wenn sehr große Mengen an Aushub zu entsorgen sind. Mineralische Bestandteile, Stahl oder andere Wertstoffe, die in der Verbrennungsanlage nicht verbrannt werden, finden sich in der Asche, die auch als Schlacke bezeichnet wird, aus der sie als verwertbare Reststoffe abgetrennt und wieder in den Stoffkreislauf gebracht werden können. Nachteilig kann bei der Verbrennung das Gefüge, d. h. die Mikrostruktur der verwertbaren Materialien und damit deren Eigenschaften verändert werden, sodass eine Verwertung aufgrund des veränderten Materialgefüges nicht der ursprünglichen Verwendung entsprechend und nur begrenzt möglich ist.

Da sich bestimmte Schadstoffe hauptsächlich an Aschepartikel mit einer bestimmten maximalen Korngröße binden, wird bei der Aufbereitung der Asche eine Klassierung der Partikel in mehrere Fraktionen unterschiedlicher Korngrößenverteilung durchgeführt, um die Anteile der Asche, die stark mit Schadstoffen belastet sind und deponiert werden müssen, von wiederverwertbaren Anteilen abzutrennen. Um den Anteil der Feinfraktion mit konzentrierter Schadstofflast möglichst klein zu halten, ist in EP 2 668 445 B1 ein Verfahren beschrieben, bei dem die Asche in einer von der Verbrennung getrennten Aufbereitungsanlage ausschließlich durch Nassklassierung in mehrere Fraktionen unterschiedlicher Korngrößenverteilung klassiert wird, wobei die Nassklassierung kornschonend mit einem Aufstromklassierer durchgeführt wird, dem ein Hydrozyklon vorgeschaltet ist, um eine Zerkleinerung der Partikel bei der Klassierung zu vermeiden. Eine Abtrennung von Metallen erfolgt nach dem Durchlaufen zumindest eines Teils der Nassklassierung.

Ausgehend von diesem Stand der Technik ist es Aufgabe der vorliegenden Erfindung, ein verbessertes Verfahren zur Aufbereitung von Aushubmassen bereitzustellen, bei dem insbesondere die Menge der nicht wiederverwendbaren, zu deponierenden Reststoffe verringert wird.

Diese Aufgabe wird durch ein Verfahren zur Aufbereitung einer Aushubmasse mit den Merkmalen des Anspruchs 1 gelöst.

Die weitere Aufgabe, eine dafür geeignete Anlage zu schaffen, wird durch eine Aufbereitungsvorrichtung mit den Merkmalen des unabhängigen Anspruchs 9 und ferner durch einen Arbeitszug mit den Merkmalen des unabhängigen Anspruchs 14 gelöst.

Weiterbildungen bzw. bevorzugte Ausführungsformen sind in den jeweiligen Unteransprüchen ausgeführt.

Gemäß einer ersten Ausführungsform bezieht sich das erfindungsgemäße Verfahren auf die Aufbereitung einer Aushubmasse, die einen Hauptanteil aus Bauschuttmaterial und zumindest einen Nebenanteil aus Bodenaushubmaterial und/oder aus Baumischabfallmaterial aufweist. Die Aushubmasse weist dabei zumindest einen nicht wiederverwendbaren Abfallstoff aus einer Gruppe auf, die zumindest organische Bodenmaterialien, Leichtbaustoffe und Schadstoffe aufweist. Der nicht wiederverwendbare Abfallstoff ist in zumindest einem der Anteile, Hauptanteil Bauschutt und/oder Nebenanteil(e) Bodenaushub oder Baumischabfall, enthalten. Das Verfahren umfasst die Schritte:
- Durchführen zumindest einer Aufbereitungsbehandlung der Aushubmasse in zumindest einer Behandlungsvorrichtung, der die Aushubmasse zugeführt wird, wobei die zumindest eine Aufbereitungsbehandlung aus einer Gruppe ausgewählt ist, die zumindest ein Trennen, ein Waschen und ein Brechen umfasst, sodass eine behandelte Aushubmasse erhalten wird, die zumindest zwei Fraktionen unterschiedlicher Korngrößenverteilung umfasst, wobei der zumindest eine nicht wiederverwendbare Abfallstoff in zumindest einer Feinfraktion enthalten ist;
- nach Überführung in eine Klassierungsvorrichtung Klassieren der behandelten Aushubmasse in die zumindest zwei Fraktionen unterschiedlicher Korngrößenverteilung, die die zumindest eine Feinfraktion mit dem zumindest einen nicht wiederverwendbaren Abfallstoff (nachfolgend auch als belastete Feinfraktion bezeichnet) und zumindest eine Grobfraktion der behandelten Aushubmasse sind, wobei die zumindest eine Grobfraktion arm an oder frei von dem zumindest einen nicht wiederverwendbaren Abfallstoff ist (nachfolgend auch nur als Grobfraktion oder unbelastete Grobfraktion bezeichnet);
- Abführen der zumindest einen Grobfraktion zu einer Wiederverwendung; und
- nach Überführung der zumindest einen belasteten Feinfraktion in eine Verbrennungsvorrichtung Verbrennen des zumindest einen nicht wiederverwendbaren Abfallstoffs der zumindest einen belasteten Feinfraktion bei einer Temperatur, die zur Verbrennung des in der zumindest einen Feinfraktion enthaltenen zumindest einen nicht wiederverwendbaren Abfallstoffs ausgewählt ist. Dabei wird aus einem Verbrennungsrückstand eine aufbereitete Feinfraktion erhalten, die arm an oder frei von dem zumindest einen nicht wiederverwendbaren Abfallstoff ist und damit einer Wiederverwendung zugeführt oder deponiert werden kann. Vorteilhaft wird durch das erfindungsgemäße Verfahren die Grobfraktion nicht der Verbrennung unterzogen, sodass ein Gefüge des Grobkorns nicht verändert wird; denn nur ein kleiner Masseanteil, ca. 5 % bis maximal 25 % der Aushubmasse, den die zumindest eine belastete Feinfraktion ausmacht und der konzentriert den zumindest einen nicht wiederverwendbaren Abfallstoff enthält, wird der thermischen Verwertung zugeführt.

Unter Aushubmasse wird vorliegend ein Materialgemenge verstanden, das bei einer Baumaßnahme anfällt. Der Hauptanteil der Aushubmasse aus recyclingfähigem Bauschuttmaterial kann z. B. Natursteine, Kies, Gesteinsbruch, Straßenbruch, Mauerwerk, Beton, Zement etc. aufweisen. Ein Nebenanteil aus Bodenaushubmaterial kann z. B. Erde, Sand, Schluff, Ton und/oder Lehm mit bindigen bzw. organischen Anteilen umfassen. Ein Nebenanteil aus Baumischabfallmaterial kann ein Gemisch aus recyclingfähigen Materialien (z. B. Glas, Holz, Metall) und nicht recyclingfähigen Materialien (z. B. Bims, Gips, Porenbeton, Kunststoffe) sein. Die Aushubmasse kann neben dem Hauptanteil Bauschuttmaterial entweder einen Nebenanteil Bodenaushubmaterial oder einen Nebenanteil Baumischabfallmaterial aufweisen. Oder die Aushubmasse kann neben dem Hauptanteil Bauschuttmaterial jeweils einen Nebenanteil Bodenaushubmaterial und einen Nebenanteil Baumischabfallmaterial aufweisen. Der zumindest eine nicht wiederverwendbare Abfallstoff kann in dem Hauptanteil (Bauschuttmaterial) oder in zumindest einem der Nebenanteile (Bodenaushubmaterial und/oder Baumischabfallmaterial) enthalten sein. Es können aber auch sowohl der Hauptanteil (Bauschuttmaterial) als auch der oder die Nebenanteile (Bodenaushubmaterial und/oder Baumischabfallmaterial) zumindest einen nicht wiederverwendbaren Abfallstoff aufweisen. Dieser stammt aus der Gruppe, die zumindest, d. h nicht ausschließlich, organische bzw. bindige Bodenmaterialien, Leichtbaustoffe wie z. B. Porenbeton, Kunststoff und umweltschädliche und/oder gefährliche Schadstoffe wie z. B. Lösungsmittel, Pestizide etc. umfasst. Je nach Vorgaben kann die Gruppe der nicht wiederverwendbaren Abfallstoffe auch weitere Materialien umfassen. Die Aushubmasse kann auch mehrere unterschiedliche nicht wiederverwendbare Abfallstoffe umfassen.

"Hauptanteil" bedeutet hierin, dass das Bauschuttmaterial den größten Massen- bzw. Gewichtsanteil der einzelnen Materialien in der Aushubmasse ausmacht, d. h., dass die Masse (Gewicht) an Bauschuttmaterial in der Aushubmasse größer ist als die Masse (Gewicht) des oder jedes Nebenanteils (Bodenaushubmaterial und/oder Baumischabfallmaterial). Weist ein Aushubmaterial beispielsweise nur einen Nebenanteil, d. h. Bodenaushubmaterial oder Baumischabfallmaterial auf, wird der Hauptanteil aus Bauschuttmaterial mehr als 50 % betragen. Weist ein Aushubmaterial hingegen sowohl einen Nebenanteil Bodenaushubmaterial als auch einen Nebenanteil Baumischabfallmaterial auf, kann die Summe der Nebenanteile ggf. größer sein als der Hauptanteil an Bauschuttmaterial, der dann beispielsweise zumindest 40 % der Aushubmasse ausmachen, vorzugsweise aber immer mehr als 50 % betragen kann. Die Prozentangaben beziehen sich hierbei jeweils auf die Masse (Gewicht).

Die Masse der zumindest einen belasteten Feinfraktion, die in der behandelten Aushubmasse enthalten ist, die durch die zumindest eine Aufbereitungsbehandlung entsteht, entspricht etwa 5 bis maximal 25 % der ursprünglichen Aushubmasse. In der an die Aufbereitungsbehandlung(en) anschließenden Klassierung wird die zumindest eine belastete Feinfraktion von zumindest einer Grobfraktion abgetrennt, die arm an oder frei von nicht wiederverwendbaren Abfallstoffen ist. Falls erwünscht, kann die Klassierung auch in mehr als zwei Fraktionen unterschiedlicher Korngrößenverteilung erfolgen. "Arm" bedeutet hier einen maximalen Gehalt an nicht wiederverwendbaren Abfallstoffen entsprechend einem dafür zulässigen Grenzwert in recycelten Baumaterialien gemäß den gesetzlichen Vorgaben. Diese können sich für die jeweiligen nicht wiederverwendbaren Abfallstoffe unterscheiden. Entsprechend meint "nahezu vollständig" einen Anteil der nicht wiederverwendbaren Abfallstoffe in der Aushubmasse, der den jeweiligen Grenzwert für recyceltes Baumaterial übersteigt.

Bei der Aufbereitung der Aushubmasse kann die Aufbereitungsbehandlung "Trennen" zum Sortieren oder Aussondern bestimmter Materialien genutzt werden und beispielsweise ein mechanisches Trennverfahren auf Basis eines Trennparameters umfassen, der aus einer Gruppe ausgewählt ist, die eine Oberflächenbenetzbarkeit, eine Dichte, eine Massenträgheit, eine Magnetisierbarkeit, eine Farbe, ein Reflexionsvermögen, ein Transmissionsvermögen und ggf. auch eine Partikelgröße umfassen kann. Unter der Aufbereitungsbehandlung "Waschen" ist vorliegend im weitesten Sinn die Befreiung eines Grobkorns von Anhaftungen, auch zur Überführung nicht wiederverwendbarer Abfallstoffe wie Schadstoffe in die Feinfraktion, zu verstehen. Das Waschen kann mechanisch (z. B. mittels Reibung durch Vibration) und/oder unter Verwendung eines Waschmediums ggf. unter erhöhtem Druck erfolgen. Beispiele für ein Waschmedium sind ein flüssiges Medium wie Wasser, ein gasförmiges Medium wie Druckluft oder ein festes Medium wie Trockeneis. Eine trockene Waschbehandlung (mechanisch und/oder gasförmiges oder festes Waschmedium) kann bevorzugt sein, da bei einer nassen Waschbehandlung mit einem flüssigen Medium wie Wasser, in dem die Feinfraktion mit den nicht wiederverwendbaren Abfallstoffen dispergiert wird, anschließend in einer weiteren Aufbereitungsbehandlung eine Trennung der Feinfraktion von dem flüssigen Medium bzw. Trocknung der Feinfraktion zu erfolgen hat. Handelt es sich bei dem Waschmedium um eine brennbare Substanz, ist es möglich, dass das gebrauchte brennbare Waschmedium entweder aufbereitet oder in einer Verfahrensvariante zumindest teilweise bei der Verbrennung der Feinfraktion als Brennstoff eingesetzt werden kann. Die Aufbereitungsbehandlung "Brechen" bezeichnet das Zerkleinern von Grobkorn bzw. das Erzeugen von Kanten zum Schärfen des Grobkorns in einem Brecher.

Grundsätzlich ist es in einer Ausführungsform des erfindungsgemäßen Verfahrens zwar möglich, dass das Verbrennen der zumindest einen belasteten Feinfraktion, die den zumindest einen nicht wiederverwendbaren Abfallstoff enthält, in einer stationären Verbrennungsvorrichtung zeitlich und räumlich getrennt von der Aufbereitungsbehandlung und dem Klassieren durchgeführt wird, die zusammen in einer mobilen Behandlungs- und Klassierungsvorrichtung am Ort der Baustelle oder in der Nähe davon stattfinden können. Die Überführung der zumindest einen belasteten Feinfraktion in die Verbrennungsvorrichtung kann dann mit einem entsprechend zum Transport der belasteten Feinfraktion geeigneten Fahrzeug erfolgen. Vor oder nach der Überführung in die Verbrennungsvorrichtung kann dabei die zumindest eine belastete Feinfraktion gelagert werden.

Vorzugsweise aber kann ein erfindungsgemäßes Verfahren nach einer weiteren Ausführungsform mit einer mobilen Aufbereitungsvorrichtung durchgeführt werden, die sämtliche Behandlungs-, Klassierungs-, Überführungs- und Verbrennungsvorrichtungen umfasst. Dazu erfolgt beim erfindungsgemäßen Verfahren vor dem Durchführen der Aufbereitungsbehandlung (das kann eine sein, könnten aber auch mehrere sein) der Aushubmasse das Bereitstellen der Aufbereitungsvorrichtung als mobile Aufbereitungsvorrichtung durch Anordnen auf einem Fahrwerk, und Positionieren der mobilen Aufbereitungsvorrichtung an einer Baustelle oder nahe der Baustelle, an der die Aushubmasse anfällt.

Die auf einem Fahrwerk (oder mehreren Fahrwerken) angeordnete mobile Aufbereitungsvorrichtung wird somit durch einen oder mehrere Wagen gebildet, der/die als Fahrzeug einen eigenen Antrieb aufweist/aufweisen oder als Anhänger mit einer Zugmaschine verbunden werden kann. Ferner kann die Aufbereitungsvorrichtung zum permanenten Verbleib auf dem Fahrwerk oder zur bedarfsweisen Anordnung auf dem Fahrwerk konzipiert sein. Das Bereitstellen einer permanent mobilen Aufbereitungsvorrichtung erfolgt einmalig, wobei die einzelnen Behandlungs-, Klassierungs-, Überführungs- und Verbrennungsvorrichtungen fest in bzw. an einem Wagen verbaut werden. Zur bedarfsweisen und damit wiederholten Anordnung auf dem Fahrwerk kann die mobile Aufbereitungsvorrichtung lösbar z. B. in einem Container oder in Modulbauweise auf der Transportfläche eines Transportwagens angeordnet werden. Dann kann die Aufbereitungsvorrichtung nach Beendigung der Baustelle von dem Transportwagen demontiert werden, der dann auch zu anderen Zwecken verwendet werden kann. Unter Modulbauweise ist hierbei zu verstehen, dass die einzelnen Behandlungs-, Klassierungs-, Überführungs- und Verbrennungsvorrichtungen in zwei oder mehr Modulen bereitgestellt werden, die Schnittstellen zur Kopplung in der verfahrensgemäßen Reihenfolge aufweisen.

Als Fahrwerk wird hierbei das Fahrgestell einschließlich der Räder oder Raupenketten verstanden, die eine Fahrbahn oder Schienen kontaktieren. Generell ist es erfindungsgemäß möglich, dass das Fahrwerk mit Rädern oder Raupenketten zur Bewegung über Boden oder Fahrbahn ausgebildet sein kann. Nach einer speziellen Ausführungsform des erfindungsgemäßen Verfahrens ist es allerdings vorgesehen, dass die mobile Aufbereitungsvorrichtung mit dem Fahrwerk zumindest einen gleisverfahrbaren Arbeitswagen bildet, der - als Aufbereitungsmaschine mit eigenem Antrieb oder als Teil eines Arbeitszugs - zu der Baustelle auf einem Gleis oder mit der Baustelle auf dem Gleis in Arbeitsrichtung bewegt werden kann.

Nach einer Weiterbildung des erfindungsgemäßen Verfahrens, bei dem die Baustelle an einer Bahnstrecke ist, ist die aufzubereitende Aushubmasse der Baustelle eine Schotteraushubmasse, die als Bauschuttmaterial Schotter aufweist und aus einer unter dem Gleis befindlichen Schotterschicht ausgehoben wird, oder eine Kiesaushubmasse, die als Bauschuttmaterial Kies aufweist und aus einer unter der Schotterschicht befindlichen Planumsschutzschicht ausgehoben wird. Die Aushubmasse kann aber auch sowohl eine Schotteraushubmasse als auch eine Kiesaushubmasse umfassen, wobei das Bauschuttmaterial Schotter der Schotteraushubmasse eine Partikelgrößenverteilung mit größeren Partikeln aufweist als das Bauschuttmaterial Kies der Kiesaushubmasse. Das erfindungsgemäße Verfahren kann für jede Aushubmasse - Schotteraushubmasse und Kiesaushubmasse - getrennt parallel durchgeführt werden. Bevorzugt kann aber die Verbrennung der belasteten Feinfraktionen aus Schotter- und Kiesaushub gemeinsam durchgeführt werden, während die Aufbereitungsbehandlungen und Klassierungen getrennt erfolgen können. Die dabei erhaltenen Grobfraktionen von Schotter und Kiesaushub können direkt wieder in der Baustelle eingesetzt werden, wobei ggf. Neumaterial Schotter und Kies und/oder Bauzusatzstoffe zugegeben werden. Die nach der Verbrennung erhaltene aufbereitete Feinfraktion kann in einem Bunkerwagen zwischengespeichert werden, um zumindest teilweise als Bauzusatzstoff in der Baustelle eingesetzt zu werden. Alternativ kann die aufbereitete Feinfraktion auch an anderen Baustellen zum Einsatz kommen oder auf einer Deponie ein- oder zwischengelagert werden.

Gemäß einer weiteren Ausführungsform des erfindungsgemäßen Verfahrens erfolgt das Verbrennen des zumindest einen nicht wiederverwendbaren Abfallstoffs der zumindest einen Feinfraktion bei einer Temperatur, die in Abhängigkeit eines Flammpunktes des zumindest einen nicht wiederverwendbaren Abfallstoffs eingestellt wird. Weisen die enthaltenen Abfallstoffe unterschiedliche Flammpunkte auf, so richtet sich die Verbrennungstemperatur nach dem höchsten Flammpunkt. Übliche Verbrennungstemperaturen liegen in einem Bereich von 800 °C bis 1.200 °C. Je nach Brennwert und Menge des zumindest einen nicht wiederverwendbaren Abfallstoffs kann zur Verbrennung die Zugabe eines Brennstoffes erforderlich sein, der ein gasförmiger, flüssiger oder fester Brennstoff sein kann, um die ausgewählte Verbrennungstemperatur zu erreichen. In der Verbrennungsvorrichtung stellt sich die Verbrennungstemperatur in Abhängigkeit der Masse und des Brennwerts des nicht wiederverwendbaren Abfallstoffs der Feinfraktion, der Masse und des Brennwerts eines ggf. zugegebenen Brennstoffs sowie Ort und Menge der Luftzufuhr ein. Die ausgewählte Verbrennungstemperatur bzw. die durch gesetzliche Vorgabe nach der letzten Verbrennungsluftzufuhr erforderliche Rauchgastemperatur hängt von der Art des zumindest einen nicht wiederverwendbaren Abfallstoff ab: Handelt es sich bei zumindest einem der zu verbrennenden Abfallstoffe um einen gefährlichen Schadstoff mit einem Halogengehalt aus halogenorganischen Stoffen von mehr als 1 Gew.-%, berechnet als Chlor, ist eine Rauchgastemperatur von zumindest 1.100 °C (nach der letzten Verbrennungsluftzuführung) für zumindest zwei Sekunden erforderlich. Gegebenenfalls kann hierzu ein Nachbrenner eingesetzt werden. Sind keine gefährlichen Schadstoffe enthalten, ist eine Rauchgastemperatur von zumindest 850 °C nach der letzten Verbrennungsluftzuführung für zumindest zwei Sekunden ausreichend. Abweichungen von den angegebenen Rauchgastemperaturen und der Verweilzeit von zwei Sekunden sind möglich bzw. zulässig, wenn eine vollständige Verbrennung des zumindest einen Abfallstoffs nachgewiesen werden kann, sodass keine Schadstoffe in Rauchgas und Schlacke enthalten sind, insbesondere keine organischen Schadstoffe wie polyzyklische aromatische Kohlenwasserstoffe oder polyhalogenierte Verbindungen.

Vorteilhaft kann die bei der Verbrennung entstehende Abwärme in an sich bekannter Weise genutzt werden, beispielsweise zur Vorwärmung der Verbrennungsluft und/oder zur Vorwärmung oder Trocknung der Feinfraktion oder des ggf. zugegebenen Brennstoffs. Alternativ oder zusätzlich kann die Abwärme zur Dampferzeugung genutzt werden, um mittels Turbine und Generator elektrischen Strom zu erzeugen. Ferner kann das Verfahren eine Reinigung des bei der Verbrennung entstehenden Rauchgases umfassen.

Gemäß einer weiteren Ausführungsform kann bei einem erfindungsgemäßen Verfahren die Aushubmasse in zumindest zwei aufeinander folgenden und/oder parallelen Behandlungsvorrichtungen nacheinander und/oder parallel zumindest zwei Aufbereitungsbehandlungen unterzogen werden, die aus der Gruppe ausgewählt sind, die zumindest das Trennen, das Waschen und das Brechen umfasst. So können sich an eine erste Aufbereitungsbehandlung, die an der Aushubmasse durchgeführt wird, eine oder mehr Aufbereitungsbehandlungen anschließen. Dabei ist es beispielsweise auch möglich, wenn eine der Aufbereitungsbehandlungen ein Trennen der Aushubmasse in zumindest zwei Teil-Aushubmassen umfasst, dass jede Teil-Aushubmasse zumindest einer weiteren Aufbereitungsbehandlung unterzogen wird, wobei die weiteren Aufbereitungsbehandlungen die gleichen oder unterschiedliche Aufbereitungsbehandlungen sein können. Alternativ dazu ist es ebenso möglich, dass nur eine der Teil-Aushubmassen zumindest einer weiteren Aufbereitungsbehandlung unterzogen wird. Dabei weist zumindest eine der Teil-Aushubmassen die belastete Feinfraktion auf, sodass die behandelte Aushubmasse, die der Klassierung unterzogen wird, die zumindest eine Teil-Aushubmasse umfasst, die die belastete Feinfraktion enthält. Enthalten mehrere oder alle Teil-Aushubmassen eine belastete Feinfraktion, besteht die behandelte Aushubmasse, die der Klassierung unterzogen wird, aus allen Teilmassen, die eine belastete Feinfraktion enthalten.

Ferner kann ein erfindungsgemäßes Verfahren nach einer weiteren Ausführungsform beinhalten, dass die aufbereitete Feinfraktion, die arm an bzw. frei von dem zumindest einen nicht wiederverwendbaren Abfallstoff ist, zumindest teilweise, z. B. als Ersatzbaustoff, der Grobfraktion bei der Wiederverwendung beigemischt wird. Die aufbereitete Feinfraktion besteht aus den mineralischen Anteilen des Verbrennungsrückstands, die nach Abkühlung und ggf. Durchlaufen einer Trennstufe zur Separierung von anderen nichtbrennbaren Anteilen, z. B. Metallen, erhalten werden.

Zum Klassieren der behandelten Aushubmasse kann grundsätzlich jedes auf der Partikelgröße basierende Trennverfahren eingesetzt werden. Gemäß einer bevorzugten Ausführungsform des erfindungsgemäßen Verfahrens kann das Klassieren der behandelten Aushubmasse durch Sieben erfolgen, um die zumindest eine belastete Feinfraktion von der zumindest einen Grobfraktion abzutrennen. Erfolgt eine Klassierung der aufbereiteten Aushubmasse in mehr als zwei Fraktionen, können diese entsprechend durch eine Siebkaskade erhalten werden. Es ist aber nicht ausgeschlossen, dass je nach Partikeltrenngröße auch unterschiedliche auf der Partikelgröße basierende Trennverfahren eingesetzt werden können, von denen eines auch ein Siebvorgang sein kann.

Je nach Partikelgrößenverteilung der aufbereiteten Aushubmasse kann das Klassieren nicht nur in eine belastete Feinfraktion und eine unbelastete Grobfraktion erfolgen, sondern alternativ dazu kann die aufbereitete Aushubmasse je nach Partikelgrößenverteilung auch in mehr als zwei Fraktionen klassiert werden, beispielsweise eine Fein-, Mittel- und Grobfraktion, eine Fein- und zwei Grobfraktionen, oder zwei Fein- und zwei Grobfraktionen etc. Nach einer weiteren Ausführungsform des erfindungsgemäßen Verfahrens ist vorgesehen, dass die Korngrößenverteilung der zumindest einen Feinfraktion, die den zumindest einen nicht wiederverwendbaren Abfallstoff enthält, eine Obergrenze der Korngröße von 1 mm aufweist. D. h., die nicht wiederverwendbaren Abfallstoffe sind in der oder den Feinfraktionen enthalten, deren Partikel eine Korngröße von 1 mm oder kleiner aufweisen. Alle Fraktionen mit größeren Korngrößen, d. h. Mittel- und Grobfraktionen und ggf. auch Feinfraktionen mit einer Untergrenze > 1 mm, sind frei von nicht wiederverwendbaren Abfallstoffen und eignen sich daher direkt zur Wiederverwendung.

Ein weiterer erfindungsgemäßer Gegenstand ist eine Aufbereitungsvorrichtung, die zur Durchführung eines erfindungsgemäßen Verfahrens zur Aufbereitung einer Aushubmasse ausgebildet ist, die einen Hauptanteil aus Bauschuttmaterial, und zumindest einen Nebenanteil aus Bodenaushubmaterial und/oder Baumischabfallmaterial aufweist, wobei der Hauptanteil und/oder der zumindest eine Nebenanteil zumindest einen nicht wiederverwendbaren Abfallstoff aus einer Gruppe aufweist, die zumindest organische Bodenmaterialien, Leichtbaustoffe und Schadstoffe aufweist. Die erfindungsgemäße Aufbereitungsvorrichtung weist gemäß einer ersten Ausführungsform zumindest eine Behandlungsvorrichtung auf, die aus einer Gruppe ausgewählt ist, die zumindest eine Trennvorrichtung, eine Waschvorrichtung und eine Brechvorrichtung aufweist. Dabei wird durch die zumindest eine Behandlungsvorrichtung die behandelte Aushubmasse bereitgestellt, die zumindest eine Feinfraktion aufweist, die den zumindest einen nicht wiederverwendbaren Abfallstoff enthält. Weiter weist die erfindungsgemäße Aufbereitungsvorrichtung eine Klassierungsvorrichtung auf, um die behandelte Aushubmasse in zumindest eine unbelastete Grobfraktion und die zumindest eine belastete Feinfraktion zu klassieren, wobei die Klassierungsvorrichtung zumindest eine Abfuhrvorrichtung für die zumindest eine Grobfraktion aufweist, um diese einer Wiederverwendung zuzuführen. Dabei ist zumindest eine erste Überführungsvorrichtung zwischen der zumindest einen Aufbereitungsvorrichtung und der Klassierungsvorrichtung vorgesehen, um die behandelte Aushubmasse von der Aufbereitungsvorrichtung zu der Klassierungsvorrichtung zu befördern. Zumindest eine zweite Überführungsvorrichtung dient der Überführung der belasteten Feinfraktion von der Klassierungsvorrichtung zu einer Verbrennungsvorrichtung, die zur Verbrennung des zumindest einen nicht wiederverwendbaren Abfallstoffs der zumindest einen belasteten Feinfraktion ausgelegt ist und zumindest eine Abfuhrvorrichtung aufweist, um eine aufbereitete Feinfraktion der Wiederverwendung oder der Deponierung zuzuführen.

Eine bevorzugte Ausführungsform der erfindungsgemäßen Aufbereitungsvorrichtung sieht vor, dass die Aufbereitungsvorrichtung eine mobile Aufbereitungsvorrichtung ist, die auf einem Fahrwerk angeordnet oder anordenbar ist. D. h., dass die mobile Aufbereitungsvorrichtung fest auf einem Wagen bzw. Fahrzeug mit Antrieb oder Anhänger errichtet ist oder lösbar auf einer Transportfläche eines Wagens aufgebaut werden kann. Dazu kann die mobile Aufbereitungsvorrichtung beispielsweise in zumindest einem Container installiert sein, der auf einem Lastkraftwagen oder einem Transportwagen angeordnet werden kann. Denkbar wäre auch eine Modulbauweise der mobilen Aufbereitungsvorrichtung, um die lösbare Anordnung auf einem Fahrwerk praktikabel zu gestalten.

Dabei ist es nicht ausgeschlossen, dass die Verbrennungsvorrichtung räumlich getrennt von der Behandlungsvorrichtung und der Klassierungsvorrichtung vorliegen kann, die dann als mobile Behandlungs- und Klassierungsvorrichtung auf (zumindest) einem Fahrwerk angeordnet sein können, um die Behandlung und Klassierung vor Ort durchführen zu können. Die durch Klassierung somit direkt an der Baustelle erhaltene Grobfraktion kann ohne weiteren Transport direkt wiederverwendet werden, lediglich die mengenmäßig kleinere, belastete Feinfraktion muss transportiert werden, wobei die zweite Überführungsvorrichtung zur Überführung der belasteten Feinfraktion von der Klassierungsvorrichtung zu der Verbrennungsvorrichtung ein Transportfahrzeug sein kann.

Gemäß einer weiteren Ausführungsform kann die erfindungsgemäße Aufbereitungsvorrichtung zumindest zwei aufeinander folgende und/oder parallele Behandlungsvorrichtungen aufweisen, die aus der Gruppe ausgewählt sind, die zumindest das Trennen, das Waschen und das Brechen aufweist. Die Aushubmasse kann einer ersten Behandlungsvorrichtung mittels einer Zuführvorrichtung aufgegeben und mittels jeweiliger Überführungsvorrichtungen zu weiteren Behandlungsvorrichtungen befördert werden.

Ferner kann nach einer weiteren Ausführungsform der erfindungsgemäßen Aufbereitungsvorrichtung vorgesehen sein, dass die Klassierungsvorrichtung eine Siebvorrichtung mit zumindest einem Siebdeck ist, dessen Siebboden eine Vielzahl gleich großer Öffnungen aufweist. Die Größe der Öffnungen bzw. die Maschenweite entspricht der Obergrenze der Partikelgröße des Grenzkorns von 1 mm, sodass die größeren Partikel der Grobfraktion als Siebüberlauf auf dem Siebboden verbleiben und die kleineren Partikel der Feinfraktion als Siebdurchgang durch die Öffnungen nach unten durchtreten.

Gemäß einer noch weiteren Ausführungsform der erfindungsgemäßen Aufbereitungsvorrichtung kann die Verbrennungsvorrichtung zumindest eine Vorrichtung zur Abhitze- bzw. Abwärmenutzung (z. B. Vorwärmung/Trocknung von Prozessstoffen und/oder Stromerzeugung) und/oder eine Vorrichtung zur Rauchgasreinigung aufweisen. Dabei können auch diverse Sensoren, z. B. zur Messung der Verbrennungstemperatur und/oder Rauchgaszusammensetzung zum Einsatz kommen, um eine vollständige Verbrennung der brennbaren Anteile der belasteten Feinfraktion sicher zu stellen und eine Emission schädlicher Substanzen in die Umwelt zu verhindern.

Eine mobile Aufbereitungsvorrichtung kann auch auf einem gleisverfahrbaren Arbeitszug angeordnet sein, auf den sich die Erfindung somit ebenfalls bezieht. Der Arbeitszug ist gemäß einer ersten Ausführungsform zur Aufbereitung zumindest einer Aushubmasse auf einem Gleis zu einer Baustelle oder in Arbeitsrichtung mit der Baustelle verfahrbar. Dieser Arbeitszug weist zumindest einen Arbeitswagen mit zumindest einer erfindungsgemäßen Aufbereitungsvorrichtung und zumindest eine Fördervorrichtung auf, mit der die Aushubmasse der zumindest einen Aufbereitungsvorrichtung zuführbar ist.

Nach einer weiteren Ausführungsform ist der erfindungsgemäße Arbeitszug zur Gleissanierung ausgebildet, wobei die Aushubmasse eine Schotteraushubmasse mit Schotter als Bauschuttmaterial aus einer unter einem Gleis befindlichen Schotterschicht und/oder eine Kiesaushubmasse mit Kies als Bauschuttmaterial aus einer unter der Schotterschicht befindlichen Planumsschutzschicht umfasst.

Bevorzugt kann ein Arbeitszug in einer weiteren Ausführungsform ferner zumindest einen Kopfarbeitswagen aufweisen, der mit zumindest einer Aushubvorrichtung für die Schotteraushubmasse aus der Schotterschicht und/oder für die Kiesaushubmasse aus der Planumsschutzschicht ausgestattet ist. Entsprechend kann eine Mehrzahl an Fördervorrichtungen dann die zumindest eine Aushubvorrichtung mit der zumindest einen Aufbereitungsvorrichtung verbinden. In weiteren Ausführungsformen kann ein erfindungsgemäßer Arbeitszug ferner zumindest eine Einbringvorrichtung für neuen und/oder aufbereiteten Schotter in die Schotterschicht und/oder für neuen und/oder aufbereiteten Kies in die Planumsschutzschicht aufweisen. Der aufbereitete Schotter entspricht der Grobfraktion der Schotteraushubmasse und der aufbereitete Kies der Grobfraktion der Kiesaushubmasse. Entsprechende Fördervorrichtungen können die zumindest eine Aufbereitungsvorrichtung, d. h. die Abfuhrvorrichtung der jeweiligen Klassierungsvorrichtung, mit der jeweiligen Einbringvorrichtung verbinden. Je nach Korngrößenverteilung kann eine unbelastete mittlere oder Feinfraktion bzw. aufbereitete Feinfraktion der Schotteraushubmasse über entsprechende Fördervorrichtungen der Einbringungsvorrichtung für neuen und/oder aufbereiteten Kies in die Planumsschutzschicht zugeführt werden. Auch kann eine aufbereitete Feinfraktion der Kiesaushubmasse über Förderbänder der Einbringungsvorrichtung für neuen und/oder aufbereiteten Kies in die Planumsschutzschicht zugeführt werden. Ferner kann ein Arbeitszug Bunkerwagen für neuen Schotter und/oder neuen Kies aufweisen, die über Fördervorrichtungen mit der jeweiligen Einbringvorrichtung verbunden sind. Weitere Bunkerwagen können zur Zwischenspeicherung z. B. der Aushubmasse, des Grobkorns, des belasteten Feinkorns und/oder des aufbereiteten Feinkorns vorgesehen sein.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: ein vereinfachtes Fließschema eines Aufbereitungsverfahrens nach einer erfindungsgemäßen Ausführungsform,
- **Fig. 2**: ein vereinfachtes Fließschema eines Aufbereitungsverfahrens nach einer weiteren erfindungsgemäßen Ausführungsform,
- **Fig. 3**: eine schematische Darstellung einer Aufbereitungsvorrichtung nach einer erfindungsgemäßen Ausführungsform,
- **Fig. 4**: eine schematische Darstellung einer mobilen Aufbereitungsvorrichtung nach einer weiteren erfindungsgemäßen Ausführungsform,
- **Fig. 5**: zwei Varianten a, b eines Teils des Aufbereitungsverfahrens nach weiteren erfindungsgemäßen Ausführungsformen in vereinfachten Fließschemata,
- **Fig. 6**: eine schematische Seitenansicht eines Arbeitszugs mit einer Aufbereitungsvorrichtung nach einer erfindungsgemäßen Ausführungsform.

Die Erfindung bezieht sich auf ein Verfahren zur Aufbereitung einer Aushubmasse und eine dazu geeignete Vorrichtung. Mit dem erfindungsgemäßen Verfahren kann eine Aushubmasse mit mineralischen und organischen Anteilen, die vor allem Aushubmassen bei Baumaßnahmen betreffen und bisher auf unterschiedliche Weise entsorgt wurden, von Belastungen befreit werden, die bislang eine Wiederverwendung verhindert haben. Somit ermöglicht das Verfahren eine bestmögliche Verwertung aller in der Aushubmasse enthaltenen Materialen. Dies wird durch Abtrennung und Verbrennung einer Feinfraktion erreicht, die die nicht wiederverwendbaren Abfallstoffe in konzentrierter Form enthält. Die Verbrennung erfolgt in einer entsprechend ausgelegten Verbrennungsvorrichtung bzw. Ofen, in dem die belastete(n) Feinfraktion(en) auf eine Temperatur gebracht werden, bei der die nicht wiederverwendbaren Abfallstoffe wie organische und bindige Anteile sowie insbesondere chemische bzw. schädliche Verunreinigungen verbrannt werden. Die gewählte Temperatur wird in Abhängigkeit der nicht wiederverwendbaren Abfallstoffe gewählt, sodass die nicht wiederverwendbaren Abfallstoffe vollständig verbrannt werden. Die vor der Verbrennung zu einem maximalen Anteil abgetrennte Grobfraktion kann direkt wieder verwendet werden, wobei das Korngefüge dem Korngefüge von Neumaterial entspricht, da die Grobfraktion, nicht die Verbrennung durchlaufen hat.

Um eine wirtschaftliche Verbrennung der belasteten Feinfraktion, die lediglich 5 bis maximal 25 % der Aushubmasse ausmacht, zu ermöglichen, ist die Verbrennungsvorrichtung der erfindungsgemäßen Aufbereitungsvorrichtung entsprechend ausgelegt und deutlich kleiner als herkömmliche Müllverbrennungsanlagen dimensioniert.

Die durch Verbrennung von gefährlichen Schadstoffen befreite Feinfraktion muss nicht in einer Enddeponie der Klasse III oder IV (oberirdische Deponie mit geologischer Barriere von mindestens 5 m und Dichtungskontrollsystem oder Untertagedeponie) abgelagert werden, sondern kann auf einer Deponie für Inertabfälle bzw. nicht gefährliche Abfälle oder Hausabfälle (Klassen 0, I, II) abgelagert werden, sodass auch hierbei Transportwege minimiert werden können. Besonders vorteilhaft ist, dass die von gefährlichen Schadstoffen befreite Feinfraktion grundsätzlich nicht deponiert werden muss, sondern als Bauzusatzstoff wiederverwendet werden kann. Als Beimischung in Baustoffen z. B. in Tragschichten und Baustoffen wie z. B. Frostschutzkies, Tragschichten verschiedenster Sieblinien, Beton oder dgl. kann die aufbereitete Feinfraktion in einer Menge zugeschlagen werden, die für die bautechnischen Eigenschaften des Gesamtgemischs irrelevant sind. D. h., das Masseverhältnis des beigemischten Feinkornes aus der aufbereiteten Feinfraktion zum Gesamtkorn wird so gewählt, dass eine technische Einsatzmöglichkeit des neuen Gesamtbaustoffes gewährleistet ist. Auf diese Weise können sowohl Grobfraktionen als auch Feinfraktionen einer Aushubmasse durch das erfindungsgemäße Verfahren wieder dem Kreislauf der Bauwirtschaft zugeführt werden.

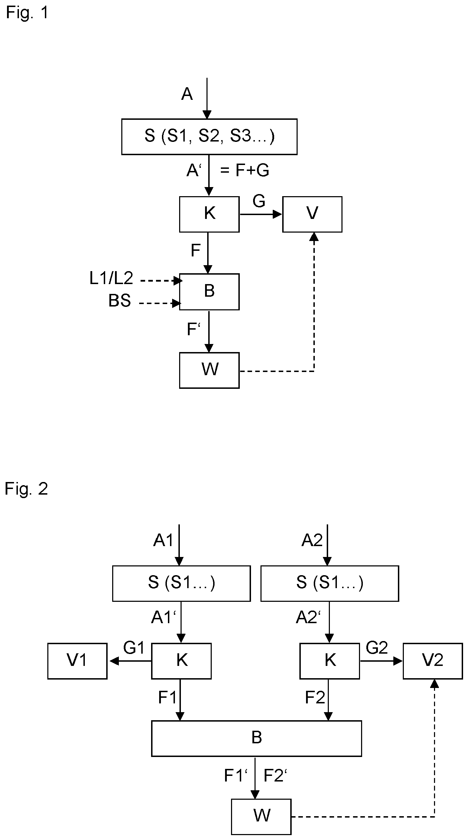

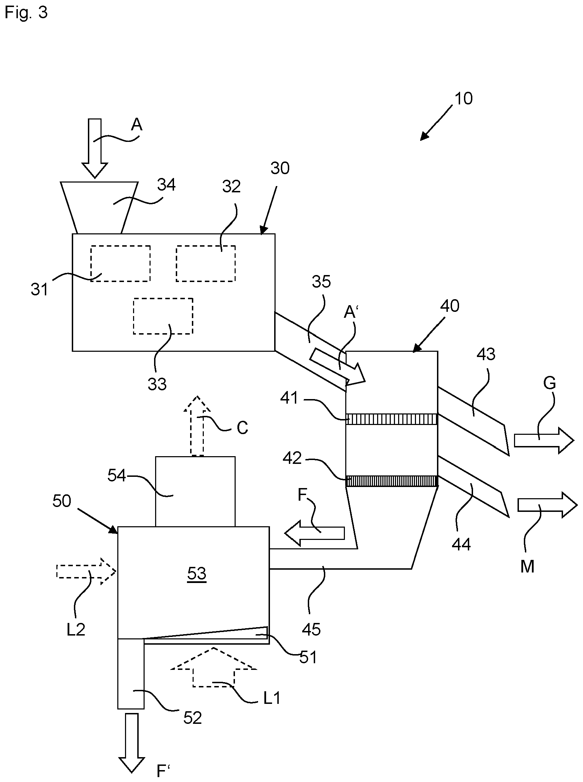

In **Fig. 1** ist ein Ablauf eines erfindungsgemäßen Verfahrens zur Aufbereitung einer Aushubmasse A dargestellt, das mit einer Aufbereitungsvorrichtung 10, wie beispielhaft in **Fig. 3** dargestellt, durchgeführt werden kann. Es kann sich um jegliche Aushubmasse A bei einer Baumaßnahme handeln, die sich aus Bauschuttmaterial und Bodenaushubmaterial und/oder Baumischabfallmaterial zusammensetzt. Das Bauschuttmaterial macht den Hauptanteil der Aushubmasse aus, die ferner entweder einen Nebenanteil Bodenaushubmaterial oder einen Nebenanteil Baumischabfallmaterial oder beides aufweist. In der Aushubmasse A ist zumindest ein nicht wiederverwendbarer Abfallstoff wie beispielsweise organische Bodenmaterialien, Leichtbaustoffe oder Schadstoffe enthalten. Diese Aushubmasse A wird in einer Behandlungsvorrichtung 30 zugeführt, mit der die Aushubmasse A einer Aufbereitungsbehandlung S unterzogen wird. Bei der Aufbereitungsbehandlung S kann es sich beispielsweise um ein Trennen S1, ein Waschen S2 oder ein Brechen S3 handeln. Durch die Aufbereitungsbehandlung S wird eine behandelten Aushubmasse A' erhalten, die eine Grobfraktion G und eine Feinfraktion F umfasst, wobei die nicht wiederverwendbaren Abfallstoffe in der Feinfraktion F enthalten sind, die den kleineren Anteil der behandelten Aushubmasse A', üblicherweise 5 bis maximal 25 % der ursprünglichen Aushubmasse A ausmacht.

Die behandelte Aushubmasse A' wird in eine Klassierungsvorrichtung 40 überführt, in der ein Klassieren K der behandelte Aushubmasse A' in die die Feinfraktion F mit den nicht wiederverwendbaren Abfallstoffen und die Grobfraktion G durchgeführt wird, die arm an oder frei von den nicht wiederverwendbaren Abfallstoffen ist. Die Grobfraktion G wird daher zu einer Wiederverwendung V abgeführt und kann vorteilhaft ohne weitere Aufarbeitung direkt wieder als Baustoff eingesetzt werden, dessen Eigenschaften sich kaum von den Eigenschaften von Neumaterial unterscheiden.

Nur die belastete Feinfraktion F wird in eine Verbrennungsvorrichtung 50 überführt, in der ein Verbrennen B der nicht wiederverwendbaren Abfallstoffe erfolgt. Die dabei eingesetzte Temperatur richtet sich nach dem Abfallstoff, der die höchste Verbrennungstemperatur benötigt. Ist ein gefährlicher Schadstoff als Abfallstoff enthalten, wird eine Verbrennungstemperatur von mindestens 1.100 °C eingestellt. Sind keine gefährlichen Schadstoffe enthalten, kann eine niedrigere Verbrennungstemperatur von z. B. 850 °C gewählt werden. Die Verbrennungstemperatur kann durch eine von der Menge und dem Brennwert der Abfallstoffe abhängigen Zugabe eines Brennstoffs BS und die Zufuhr von Verbrennungsluft gesteuert werden. Nach der vollständigen Verbrennung der Abfallstoffe wird aus dem Verbrennungsrückstand eine aufbereitete Feinfraktion F' erhalten, die arm an oder frei den nicht wiederverwendbaren Abfallstoffen ist. Die aufbereitete Feinfraktion F' kann der Weiterverarbeitung W zugeführt werden. Die Weiterverarbeitung W kann eine Wiederverwendung als Bauzusatzstoff beinhalten, beispielsweise bei der Wiederverwendung V der Grobfraktion G oder bei einer anderen Baumaßnahme. Die Weiterverarbeitung W kann allerdings auch eine Behandlung oder Sortierung der aufbereiteten Feinfraktion F' umfassen, beispielswese die Abtrennung eines mineralischen Anteils der aufbereiteten Feinfraktion F' von einem anderen nichtbrennbaren, z. B. metallischen Anteil, sodass mineralischer Feinkornanteil und metallischer Feinkornanteil getrennt einer Wiederverwendung zugeführt werden können.

In **Fig. 3** ist eine Aufbereitungsvorrichtung 10 skizziert, die zur Durchführung eines entsprechenden Verfahrens zur Aufbereitung einer Aushubmasse A ausgebildet ist, mit dem Unterschied, dass bei der Klassierung K nicht nur eine Grobfraktion G und eine Feinfraktion F, sondern auch eine Mittelfraktion M mit einer zwischen Grob- und Feinfraktion liegenden Korngrößenverteilung abgetrennt werden, die wie die Grobfraktion G frei von bzw. arm an Abfallstoffen ist und daher direkt einer Wiederverwendung zugeführt werden kann. Die Aufbereitungsvorrichtung 10 weist im gezeigten Beispiel einen Aufgabetrichter als Zuführvorrichtung 34 auf, um die Aushubmasse Ader Behandlungsvorrichtung 30 zuzuführen, die hier nicht näher dargestellt ist. Die Behandlungsvorrichtung 30 kann eine Trennvorrichtung 31, eine Waschvorrichtung 32 oder eine Brechvorrichtung 33 oder eine beliebige Kombination davon sein, wobei die Strichelierung der Trenn-, Wasch- und Brechvorrichtung 31, 32, 33 darstellen soll, dass die Behandlungsvorrichtung 30 entsprechend durch mehrere unterschiedliche Ausführungen realisiert sein kann.

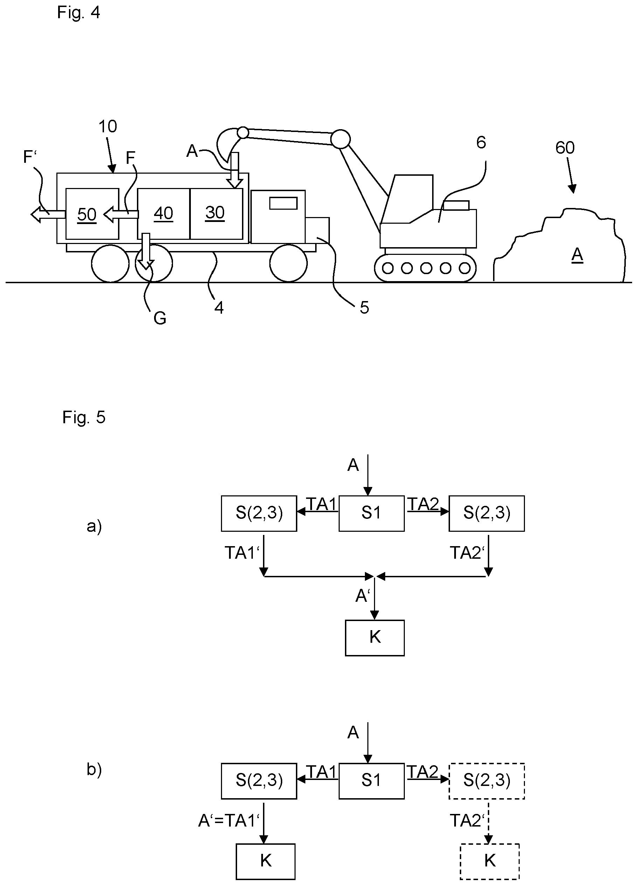

**Fig. 5a****, b** zeigt Beispiele für zwei Verfahrensvarianten bei der Behandlung der Aushubmasse A, ohne dass die Erfindung darauf beschränkt sein soll. Jegliche weitere Kombinationen von Behandlungen, die in Anzahl und Reihenfolge - je nach Zusammensetzung der Aushubmasse - abweichen können, liegen im Ermessen des Fachmanns und sind als umfasst anzusehen. So kann die Aushubmasse A auch in zumindest zwei aufeinander folgenden und/oder parallelen Behandlungsvorrichtungen 30, die eine Trennvorrichtung 31, eine Waschvorrichtung 32 oder eine Brechvorrichtung 33 sind, nacheinander und/oder parallel den entsprechenden Aufbereitungsbehandlungen S, d. h. einem Trennen S1, Waschen S2 oder Brechen S3 unterzogen werden. Die Beispiele in **Fig. 5a****, b** beziehen sich darauf, dass die erste Behandlung S, der die Aushubmasse A unterzogen wird, ein Trennen S1 der Aushubmasse A in zwei Teil-Aushubmassen TA1, TA2 ist. Das Trennen S1 erfolgt durch ein mechanisches Trennverfahren auf Basis unterschiedlicher physikalischer, insbesondere mechanischer Eigenschaften und umfasst das Sortieren bzw. Aussondern bestimmter Materialien beispielsweise anhand optischer Merkmale wie der Lichtadsorption (Farbe) oder dem Reflexions- oder Transmissionsvermögen. Ferner kann das Trennen S1 zum Sortieren bzw. Aussondern bestimmter Materialien anhand der Magnetisierbarkeit, der Massenträgheit oder anhand der Oberflächenbenetzbarkeit und/oder Dichte erfolgen. Das Trennen S1 kann aber auch - wie das nachfolgende Klassieren K - ein Trennverfahren auf Basis der Partikelgröße umfassen, um Partikel oberhalb einer für die Wiederverwendung vorbestimmten Grenzgröße auszusortieren, die z. B. im Anwendungsbeispiel Gleisschotter bei 63 mm liegt. Neben dem Sieben kommen als Trennverfahren zur Größentrennung auch Rechen oder Sichten in Frage.

In der Variante nach **Fig. 5a** wird jede Teil-Aushubmasse zumindest einer weiteren Aufbereitungsbehandlung S unterzogen, die ein Waschen S2 und/oder Brechen S3 sein kann, wobei jeweils eine behandelte Teil-Aushubmasse TA1', TA2' erhalten wird, die zusammen als behandelte Aushubmasse A' der Klassierung K zugeführt werden. **Fig. 5b** zeigt eine alternative Verfahrensvariante, in der nur eine behandelte Teil-Aushubmasse TA1', die nach Durchführung zumindest einer weiteren Aufbereitungsbehandlung S (Waschen S2 und/oder Brechen S3) der Teil-Aushubmasse TA1 erhalten wird, eine belastete Feinfraktion aufweist und als behandelte Aushubmasse A' dem Klassieren unterzogen wird. Ob die Teil-Aushubmasse TA2, die keine nicht wiederverwendbaren Abfallstoffe enthält, einer oder mehreren weiteren Aufbereitungsbehandlungen S (Waschen S2 und/oder Brechen S3) unterzogen wird, kann von der Art und Zusammensetzung der Teil-Aushubmasse TA2 abhängig sein. Eine weitere Aufbereitungsbehandlung S, um eine behandelte Teil-Aushubmasse TA2` zu ergeben, ist daher optional, wie durch die Strichelierung angedeutet wird. Entsprechendes gilt auch für eine ggf. folgende Klassierung K der behandelten Teil-Aushubmasse TA2`, woran sich allerdings keine Verbrennung anschließt: Denn in der Teil-Aushubmasse TA2 sind keine nicht wiederverwendbaren Abfallstoffe enthalten, sodass auch die bei einer Klassierung K erhaltbare Feinfraktion unbelastet ist. Anders als dargestellt können die Aufbereitungsbehandlungen an den Teil-Aushubmassen unterschiedliche Aufbereitungsbehandlungen sein, ferner kann auch die Anzahl der Behandlungen variieren. Zudem ist nicht zwingend, dass als erste Behandlung ein Trennen erfolgt.

Eine durch die Behandlung in der Behandlungsvorrichtung 30 erhaltene behandelte Aushubmasse A' wird in der Aufbereitungsvorrichtung 10 gemäß **Fig. 3** mittels einer ersten Überführungsvorrichtung 35 in die Klassierungsvorrichtung 40 überführt, die hier eine Siebvorrichtung 40 mit zwei Siebdecks 41, 42 ist. Das erste Siebdeck 41 weist einen Siebboden mit einer Maschenweite auf, die als Siebüberlauf eine Grobfraktion G zurückhält. Die Grobfraktion G kann (für das Anwendungsbeispiel Gleisschotter) beispielsweise Korngrößen von 31,5 mm bis 63 mm aufweisen. Dem ersten Siebdeck 41 ist eine Abfuhrvorrichtung 43 zugeordnet, um die vom Siebdeck 41 zurückgehaltene Grobfraktion G abzufördern und der Wiederverwendung zuführen zu können. Das zweite Siebdeck 42 weist einen Siebboden mit einer Maschenweite auf, die kleiner ist als die Maschenweite des ersten Siebdecks 41 und als Siebüberlauf eine Mittelfraktion M zurückhält. Die Mittelfraktion M kann (für das Anwendungsbeispiel Planumsschutzkies) beispielsweise Korngrößen zwischen 1 mm und 31,5 mm aufweisen. Dem zweiten Siebdeck 42 ist eine Abfuhrvorrichtung 44 zugeordnet, um die vom Siebdeck 42 zurückgehaltene Mittelfraktion abzufördern und getrennt von der Grobfraktion G der Wiederverwendung zuführen zu können. Die Maschenweite des zweiten Siebdecks 42 entspricht der für die belastete Feinfraktion F bestimmten Obergrenze der Partikelgröße des Grenzkorns von 1 mm, sodass die belastete Feinfraktion F als Siebdurchgang des zweiten Siebdecks 42 erhalten wird. Entsprechende Modifikationen der Klassierungsvorrichtung 40, um die behandelte Aushubmasse A' in mehr oder weniger Fraktionen zu klassieren, sind dem Fachmann bekannt und werden aus dem dargestellten Beispiel durch Änderung der Anzahl der Siebdecks erhalten.

Die in der Klassierungsvorrichtung 40 abgetrennte Feinfraktion F, die die nicht wiederverwendbaren Abfallstoffe enthält, wird hier mittels einer zweiten Überführungsvorrichtung 45 direkt in die angeschlossene Verbrennungsvorrichtung 50 überführt. Als Überführungsvorrichtungen 35, 45 können bekannte Fördereinrichtungen wie z. B. Förderbänder, Förderschnecken etc. eingesetzt werden. Die Verbrennungsvorrichtung 50 ist zur Verbrennung der in der Feinfraktion F enthaltenen Abfallstoffe ausgelegt und im vorliegenden Beispiel als Rostfeuerung dargestellt. Die belastete Feinfraktion F wird dosiert in den Ofenraum 53 befördert und landet auf einem Brennrost 51, der beispielsweise als Wanderrost, Schüttelrost, Treppenrost, Walzenrost oder Schürrost ausgeführt sein kann und der die Feinfraktion F während der Verbrennung weiter in Richtung einer Abfuhrvorrichtung 52 für die Schlacke aus Brennraum und Rostdurchfall als aufbereitete Feinfraktion F' befördert. Die auf diese Weise von Abfallstoffen befreite Feinfraktion F' kann einfach deponiert oder ggf. nach Weiterbehandlung einer Wiederverwendung zugeführt werden.

Bei der Verbrennung werden zunächst in einer ersten stromaufwärts liegenden Zone des Brennrosts 51 bei Temperaturen über 100 °C etwaige in Feinfraktion F enthaltene Wasseranteile verdampft. Anschließend entstehen in einer Zone mit 250 bis 900 °C Entgasungsprodukte, die bei Erreichen des jeweiligen Flammpunktes bei Temperaturen von 800 bis 1.200 °C verbrennen, bevor auf einer letzten Zone des Brennrosts 51 der sogenannte Restausbrand erfolgt. Dabei wird unterhalb des Brennrosts 51 Primärluft L1 zugeführt, mit der eine unvollständige Verbrennung initiiert wird, und oberhalb des Brennrosts 51 Sekundärluft L2 zur Nachverbrennung zugeführt, um die bei der unvollständigen Verbrennung entstandenen Reaktionsprodukte wie Kohlenstoffmonoxid und Kohlenwasserstoffe etc. in der Nachverbrennung vollständig zu oxidieren. Durch die Dosierung von Primär- und Sekundärluft L1, L2, wobei die Luftmenge zonenabhängig eingestellt werden kann, kann somit die Verbrennung und die Bildung der Reaktionsprodukte beeinflusst und eine vollständige Verbrennung bei möglichst geringer Stickoxidbildung erreicht werden. Für eine vollständige Verbrennung ist vorgesehen, dass die Rauchgase nach der letzten Verbrennungsluftzufuhr eine Temperatur von mindestens 850 °C, bei gefährlichen Schadstoffen von zumindest 1.100 °C für mindestens zwei Sekunden aufweisen. Geringere Temperaturen sind im Verbrennungsraum zulässig, wenn die Einhaltung der festgelegten Emissionsgrenzwerte nachgewiesen wird.

Nicht dargestellt ist eine Vorrichtung für eine zusätzliche Zufuhr eines Brennstoffs, die ggf. bei Anfahren der Verbrennungsvorrichtung und/oder bei zu geringem Brennwert oder Masse der Abfallstoffe erforderlich sein kann, um die Temperatur in der Verbrennungsvorrichtung hoch genug zu halten.

Bei der Aufbereitungsvorrichtung 10 in **Fig. 3** weist die Verbrennungsvorrichtung 50 eine sich an den Ofenraum 53 anschließende Vorrichtung 54 auf, die beispielsweise zur Abwärmenutzung und/oder Reinigung des Rauchgases C ausgebildet ist. Die Wärme des Rauchgases C kann als Prozesswärme zur Trocknung oder Vorwärmung oder zur Dampferzeugung genutzt werden, um eine Turbine zur Stromerzeugung mittels Generator anzutreiben. Eine Rauchgasreinigungsanlage kann beispielsweise eine Entstickung des Rauchgases durch selektive katalytische oder nicht-katalytische Reduktion, einen Filter zur Staubabscheidung, z. B. Oberflächenfilter und/oder Elektrofilter, und nasse, trockene oder quasitrockene Gaswäsche zum Abscheiden von Schadstoffen.

Als alternative Verbrennungsmethode zur Rostfeuerung kommt z. B. auch eine Wirbelschichtfeuerung in Frage, da nur die Feinfraktion mit Partikeln < 1 mm zur Verbrennung gelangt. Bei der Wirbelschichtfeuerung weist der Ofen im Boden des Brennraums ein Düsenbett auf, mit dem eine stationäre oder zirkulierende Wirbelschicht erzeugt wird. Die Wirbelschichtfeuerung hat durch gute Durchmischung den Vorteil einer vergleichsweise gleichmäßigen Verbrennung bei relativ niedrigen Temperaturen zwischen 800 °C und 900 °C mit relativ geringer Bildung von Kohlenstoffmonoxid und Stickoxiden. Ferner kann Rauchgas teilweise rückgeführt werden, um die Verbrennung zu optimieren. Bei einem stationären Wirbelbett erfolgt die Beschickung durch Wurfbeschicker oder Förderschnecken von oben; bei der zirkulierenden Wirbelschicht werden pneumatische Förderleitungen eingesetzt, um die Feinfraktion und einen von oben aufgegebenen Brennstoff im Luftstrom mitzureißen.

Die Verbrennungsvorrichtung 50 kann in einer neu errichteten Aufbereitungsvorrichtung 10 bereits bei Planung integriert werden, eignet sich aber auch als Nachrüstlösung zum Anschluss an eine bestehende Anlage, in der eine Behandlung und Klassierung einer Aushubmasse durchgeführt wird, sodass eine erfindungsgemäße Aufbereitungsvorrichtung 10 erhalten wird.

Und da die Verbrennungsvorrichtung 50 aufgrund der geringeren Masse des zu verbrennenden Feingutanteils kleiner dimensioniert ist als herkömmliche Müllverbrennungsanlagen, ist es möglich, dass das Verfahren mit einer mobilen Aufbereitungsvorrichtung 10 durchgeführt wird, die an einer Baustelle oder nahe der Baustelle positioniert wird, an der die Aushubmasse A anfällt. Damit entfallen Transportwege vom Ort einer Baustelle bzw. einer Behandlungs- und Klassierungsvorrichtung 30, 40 zu einer Verbrennungsvorrichtung 50 bzw. werden Transportwege in Bezug auf Distanz und Anzahl der Fahrzeuge bzw. Fahrten reduziert, wodurch auch die Verbrennung der Feinfraktion, die in kleineren Mengen anfällt, wirtschaftlich dargestellt werden kann.

Beispielsweise zeigt **Fig. 4** eine mobile Aufbereitungsvorrichtung 10, die in einem Container aufgebaut und auf einem Lastkraftwagen 5 mit straßenverfahrbarem Fahrwerk 4 angeordnet ist. Damit kann die mobile Aufbereitungsvorrichtung 10 an die Baustelle 60 verfahren werden, an der die Aushubmasse A anfällt. Um diese der Aufbereitungsvorrichtung 10 zuzuführen, kann beispielsweise der als Aushubvorrichtung 6 eingesetzte Bagger genutzt werden. Die bei Durchführung des Verfahrens erhaltene Grobfraktion G und von Abfallstoffen befreite Feinfraktion F' können jeweils separat gelagert oder abtransportiert werden, um ggf. nach weiterer Aufbereitung vor Ort oder an anderer Stelle wiederverwendet oder deponiert zu werden. Anders als dargestellt, ist es auch möglich, dass eine mobile Aufbereitungsvorrichtung 10 auf mehrere Container verteilt ist, die bei Anordnung auf Lastkraftfahrzeugen mobil an eine Baustelle verfahrbar sind, wo sie durch entsprechend variable Überführungsvorrichtungen miteinander verbunden werden können.

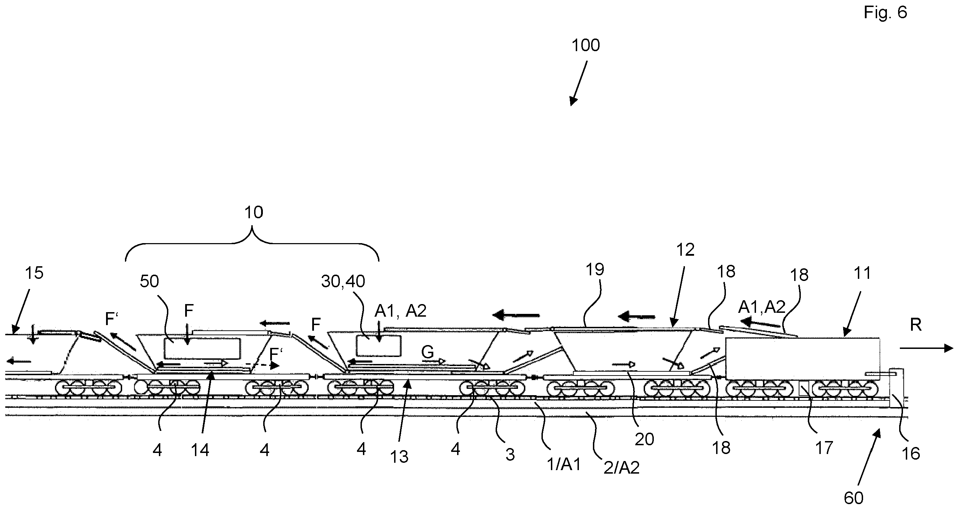

Insbesondere kann eine mobile Aufbereitungsvorrichtung 10 durch einen Arbeitszug 100 bereitgestellt werden, wofür in **Fig. 6** ein Beispiel schematisch dargestellt ist. Der Arbeitszug 100 dort weist eine Reihung von Wagen 11, 12, 13, 14, 15 mit gleisverfahrbaren Fahrwerk 4 auf und ist zur Gleissanierung ausgebildet. Dies umfasst hier an einer Gleisbaustelle 60 die Aufbereitung einer Schotteraushubmasse A1 mit Schotter als Bauschuttmaterial aus einer unter einem Gleis 3 befindlichen Schotterschicht 1 und die Aufbereitung einer Kiesaushubmasse A2 mit Kies als Bauschuttmaterial aus einer unter der Schotterschicht 1 befindlichen Planumsschutzschicht 2. Schotter und Kies haben dabei unterschiedliche Korngrößen: Die Korngröße für Gleisschotter liegt in einem Bereich von 31,5 bis 63 mm, während Planumskies Korngrößen zwischen 1 und 31,5 mm aufweist.

Der Arbeitszug 100 wird mittels eines nicht dargestellten Antriebs auf dem Gleis 3 in eine Arbeitsrichtung R mit der Baustelle verfahren, wobei kontinuierlich Aushubmaterialien aus der Schotter- und der Planumsschutzschicht 1, 2 ausgehoben werden. Der Kopfarbeitswagen 11 des Arbeitszugs 100 weist dazu jeweils eine Aushubvorrichtung 16 für die Schotteraushubmasse A1 aus der Schotterschicht 1 und für die Kiesaushubmasse A2 aus der Planumsschutzschicht 2 auf, wobei in **Fig. 6** nur eine Aushubvorrichtung 16 stellvertretend für beide dargestellt ist.

Über Dachförderbänder 19 und zugeordnete Übergabeförderbänder 18 werden die Aushubmassen A1, A2 zu einem Arbeitswagen 13 transportiert, der zur Durchführung eines Verfahrens nach **Fig. 2** für jede Aushubmasse A1, A2 eine Behandlungsvorrichtung 30 und eine Klassierungsvorrichtung 40 aufweist, wobei stellvertretend nur eine Vorrichtung 30, 40 dargestellt ist. Die Aushubmassen A1, A2 werden der jeweilige Behandlungsvorrichtung 30 zugeführt, um zumindest einer Behandlung S unterzogen zu werden, wobei eine behandelte Aushubmasse A1', A2' erhalten wird, die in die jeweilige Klassierungsvorrichtung 40 überführt und jeweils einer Klassierung K in eine Schotter-Grobfraktion G1 und eine Schotter-Feinfraktion F1 bzw. eine Kies-Grobfraktion G2 und eine Kies-Feinfraktion F2 unterzogen werden, wobei in **Fig. 6** nur eine Grobfraktion G und eine Feinfraktion F bezeichnet ist, die stellvertretend für beide gelten.

Die erhaltenen Grobfraktionen G werden zur Wiederverwendung V1, V2 über Boden- und zugeordnete Übergabeförderbänder 20, 18 von dem Arbeitswagen 13 in einen Zwischenbunkerwagen 12 und von dort zu dem Kopfarbeitswagen 11 transportiert. Der Kopfarbeitswagen 11 des dargestellten Arbeitszugs 100 ist mit jeweils einer Einbringvorrichtung 17 für Schotter in die Schotterschicht 1 und für Kies in die Planumsschutzschicht 2 ausgestattet, wobei auch hier nur eine Einbringvorrichtung 17 stellvertretend für beide dargestellt ist. Bei dem eingebauten Schotter bzw. Kies kann es sich um Neumaterial, das aus einem Bunkerwagen wie dem Zwischenbunkerwagen 12 über entsprechende Förderbänder zugeführt werden kann, oder um reines Recyclingmaterial, das mittels eines Aufbereitungsverfahrens aus den Aushubmassen A1, A2 erhalten wird, oder um eine Mischung aus beiden handeln. Dabei können insbesondere dem Kies zum Einbau in die Planumsschutzschicht 2 weitere Bau- bzw. Zuschlagstoffe zugegeben werden.

Die jeweilige Feinfraktion F, die die nicht wiederverwendbaren Abfallstoffe aufweist, wird von der Klassierungsvorrichtung 40 über Förderbänder 18, 20, die hier der zweiten Überführungsvorrichtung 45 entsprechen, zu einem weiteren Arbeitswagen 14 transportiert, der mit einer Verbrennungsvorrichtung 50 ausgestattet ist. Es ist zwar möglich, dass jeweils eine Verbrennungsvorrichtung 50 für die Feinfraktionen F1, F2 beider Aushubmassen A1, A2 vorgesehen sein kann, die etwa mit unterschiedlichen Verbrennungsbedingungen betrieben werden können. Vorteilhaft können alternativ aber auch wie in **Fig. 2** dargestellt ist, beide belasteten Feinfraktionen F1, F2 der Verbrennung B in einer Verbrennungsvorrichtung 50 zugeführt werden, deren Verbrennungsbedingungen entsprechend den enthaltenen nicht wiederverwendbaren Bestandteilen ausgewählt sind. Die so erhaltene aufbereitete Feinfraktion F', die die Feinfraktionen F1' und F2' umfasst und von nicht wiederverwendbaren Abfallstoffen befreit ist, kann, ggf. nach Weiterbehandlung W, als Zuschlagstoff bei der Wiederverwendung V2 der Kies-Grobfraktion G2 zum Einbau in die Planumsschutzschicht 2 eingesetzt werden, wie durch den gestrichelten Pfeil in **Fig. 2** **und** **6** angedeutet ist. Alternativ dazu kann die aufbereitete Feinfraktion F' über entsprechende Förderbänder in Bunkerwagen 15 transportiert und gespeichert werden, um schließlich an anderer Stelle eingesetzt oder deponiert zu werden.

Alternativ zum Verfahren von **Fig. 2** kann ein Arbeitszug 100 wie in **Fig. 6** zur gemeinsamen Aufbereitung der beiden Aushubmassen A1, A2 ausgebildet sein. D. h., dass die beiden Aushubmassen A1, A2 gemeinsam als eine Aushubmasse A zumindest einer Behandlung in der Behandlungsvorrichtung 30 unterzogen und danach in einer einzigen Klassierungsvorrichtung 40 klassiert werden, um eine einzige belastete Feinfraktion zu erhalten, die der Verbrennungsvorrichtung 50 zugeführt wird. Die Klassierungsvorrichtung 40 kann dann beispielsweise wie die Aufbereitungsvorrichtung 10 in **Fig. 3** zumindest zwei Trennstufen aufweisen, um außer einer belasteten Feinfraktion F' eine Schotter-Grobfraktion G zum Wiedereinbau in die Schotterschicht 1 und eine Kies-Mittelfraktion M zum Einbau in die Planumsschutzschicht 2 zu erhalten.

Und anders als am Beispiel des Arbeitszugs 100 aus **Fig. 6** und dem Verfahren aus **Fig. 2** beschrieben, können Arbeitszüge auch nur zur Aufarbeitung einer der Aushubmassen Schotteraushubmasse A1 oder Kiesaushubmasse A2 ausgebildet sein. Ferner können Arbeitszüge eine von **Fig. 6** abweichende Anzahl und Anordnung bzw. Reihung der Wagen aufweisen. Beispielsweise kann ein Arbeitswagen mehrere Zwischenbunkerwagen 12 und/oder Bunkerwagen 15 zur Speicherung von behandelten bzw. aufbereiteten Massen und/oder von Neumaterialien aufweisen. Ferner können die Komponenten der Aufbereitungsvorrichtung 10 - Behandlungsvorrichtung 30, Klassierungsvorrichtung 40 und Verbrennungsvorrichtung 50 - anders als dargestellt auf einen oder mehrere Arbeitswagen verteilt sein. So kann jede Vorrichtung 30, 40, 50 auf einem separaten Arbeitswagen angeordnet sein, oder alle Vorrichtungen 30, 40, 50 können auf einem gemeinsamen Arbeitswagen angeordnet sein. Und falls eine Aufbereitungsvorrichtung 10 mehrere Behandlungsvorrichtungen 31, 32, 33 für eine Aushubmasse und/oder mehrere Behandlungs- und Klassierungsvorrichtungen 30, 40 für mehrere Aushubmassen aufweist, können einzelne Vorrichtungen auf einem Arbeitswagen kombiniert und andere Vorrichtungen auf mehreren Arbeitswagen verteilt sein. Entsprechende Fördereinrichtungen können die jeweiligen Vorrichtungen gemäß dem für die jeweilige Aushubmasse vorgesehenen Verfahren miteinander verbinden.

Ferner umfasst die Erfindung auch Arbeitszüge, die abweichend zu dem in **Fig. 6** dargestellten Beispiel einen Kopfarbeitswagen ohne Aushubvorrichtung und/oder ohne Einbringvorrichtung aufweisen. D. h., es sind auch Arbeitszüge mit einem Kopfarbeitswagen umfasst, der eine Aushubvorrichtung, aber keine Einbringvorrichtung, oder umgekehrt, oder keines von beiden aufweist. In diesen Fällen kann der Ausbau der Aushubmasse(n) bzw. der Einbau der aufbereiteten und/oder neuen Materialien mit einer von dem Arbeitszug getrennten Baumaschine wie beispielsweise einem Bagger etc. erfolgen. Ein Kopfarbeitswagen, der keine Aushubvorrichtung aufweist, kann mit Fördereinrichtungen ausgestattet sein, die von der separaten Baumaschine mit der/den Aushubmasse(n) beschickt werden können, um die Aushubmasse(n) zu einem Arbeitswagen mit einer Aufbereitungsvorrichtung zu befördern. Ferner können Fördereinrichtungen eines Kopfarbeitswagens ohne Einbringvorrichtung dazu ausgebildet sein, die aufbereiteten und/oder neuen Materialien, die von der Aufbereitungsvorrichtung und/oder einem Bunkerwagen zugeführt werden, den separaten Baumaschinen zur Verfügung stellen.

### BEZUGSZEICHENLISTE

- 1: Schotterschicht
- 2: Planumsschutzschicht
- 3: Gleis
- 4: Fahrwerk
- 5: Transportfahrzeug
- 6: Aushubvorrichtung
- 10: Aufbereitungsvorrichtung
- 100: Arbeitszug
- 11: Kopfarbeitswagen
- 12: Zwischenbunkerwagen
- 13, 14: Arbeitswagen
- 15: Bunkerwagen
- 16: Aushubvorrichtung
- 17: Einbringvorrichtung
- 18: Übergabeförderband
- 19: Dachförderband
- 20: Bodenförderband
- 30: Behandlungsvorrichtung
- 31, 32, 33: Trenn-, Wasch-, Brechvorrichtung
- 34: Aufgabevorrichtung
- 35: Überführungsvorrichtung
- 40: Klassierungsvorrichtung
- 41, 42: Siebdeck
- 43, 44: Abfuhrvorrichtung
- 45: Überführungsvorrichtung
- 50: Verbrennungsvorrichtung
- 51: Brennrost
- 52: Abfuhrvorrichtung
- 53: Ofenraum
- 54: Abhitzekessel, Rauchgasreinigungsvorrichtung
- 60: Baustelle
- A: Aushubmasse
- A1, A2: Schotteraushubmasse, Kiesaushubmasse
- A', A1', A2': behandelte Aushubmasse
- B: Verbrennen
- BS: Brennstoff
- C: Rauchgas
- F, F1, F2: Feinfraktion
- F', F1', F2': Verbrennungsrückstand - aufbereitete Feinfraktion
- G, G1, G2: Grobfraktion
- K: Klassieren
- L1, L2: Verbrennungsluft, Primär-, Sekundärluft
- M: Mittelfraktion
- R: Arbeitsrichtung
- S: Aufbereitungsbehandlung
- S1, S2, S3: Trennen, Waschen, Brechen
- TA1, TA2: Teil-Aushubmasse
- TA1', TA2': behandelte Teil-Aushubmasse
- V, V1, V2: (Wieder-) Verwendung
- W: Weiterverarbeitung

## Patentansprüche

1. Verfahren zur Aufbereitung einer Aushubmasse (A), die einen Hauptanteil aus Bauschuttmaterial und zumindest einen Nebenanteil aus Bodenaushubmaterial und/oder Baumischabfallmaterial aufweist, wobei Aushubmasse (A) zumindest einen nicht wiederverwendbaren Abfallstoff aus einer Gruppe aufweist, die zumindest organische Bodenmaterialien, Leichtbaustoffe und Schadstoffe aufweist, **umfassend die Schritte**
- Durchführen zumindest einer Aufbereitungsbehandlung (S) der Aushubmasse (A), wobei die zumindest eine Aufbereitungsbehandlung (S) aus einer Gruppe ausgewählt ist, die zumindest ein Trennen (S1), ein Waschen (S2) und ein Brechen (S3) umfasst, und Erhalten einer behandelten Aushubmasse (A'), die zumindest zwei Fraktionen (F, G) unterschiedlicher Korngrößenverteilung umfasst, wobei der zumindest eine nicht wiederverwendbaren Abfallstoff in zumindest einer Feinfraktion (F) enthalten ist;
- Klassieren (K) der behandelten Aushubmasse (A`) in einer Klassierungsvorrichtung (40) in die zumindest zwei Fraktionen (F, G) unterschiedlicher Korngrößenverteilung, die die zumindest eine Feinfraktion (F) mit dem zumindest einen nicht wiederverwendbaren Abfallstoff und zumindest eine Grobfraktion (G) der behandelten Aushubmasse (A`) sind, wobei die zumindest eine Grobfraktion (G) arm an oder frei von dem zumindest einen nicht wiederverwendbaren Abfallstoff ist;
- Abführen der zumindest einen Grobfraktion (G) zu einer Wiederverwendung (V); und
- Überführen der zumindest einen Feinfraktion (F) in eine Verbrennungsvorrichtung (50) und
- Verbrennen (B) des zumindest einen nicht wiederverwendbaren Abfallstoffs der zumindest einen Feinfraktion (F) bei einer Temperatur, die zur Verbrennung des in der zumindest einen Feinfraktion (F) enthaltenen zumindest einen nicht wiederverwendbaren Abfallstoffs ausgewählt ist, und aus einem Verbrennungsrückstand Erhalten einer aufbereiteten Feinfraktion (F'), die arm an oder frei von dem zumindest einen nicht wiederverwendbaren Abfallstoff ist.

2. Verfahren nach Anspruch 1, **umfassend die Schritte**
vor dem Durchführen der zumindest einen Aufbereitungsbehandlung (S) der Aushubmasse (A):
- Bereitstellen der Aufbereitungsvorrichtung (10) als mobiler Aufbereitungsvorrichtung (10) durch Anordnen auf einem Fahrwerk (4), und
- Positionieren der mobilen Aufbereitungsvorrichtung (10) an einer Baustelle (60) oder nahe der Baustelle (60), an der die Aushubmasse (A) anfällt.

3. Verfahren nach Anspruch 2, **wobei**
die mobile Aufbereitungsvorrichtung (10) mit dem Fahrwerk (4) zumindest einen Arbeitswagen (13, 14) bildet, der auf einem Gleis (3) zu oder mit der Baustelle (60) bewegt wird.

4. Verfahren nach Anspruch 2 oder 3, **wobei** die Baustelle (60) eine Gleisbaustelle (60) an einer Bahnstrecke ist und die Aushubmasse (A), die aufbereitet wird, eine Schotteraushubmasse (A1), die als Bauschuttmaterial Schotter aufweist und aus einer unter dem Gleis (3) befindlichen Schotterschicht (1) ausgehoben wird, und/oder eine Kiesaushubmasse (A2) ist, die als Bauschuttmaterial Kies aufweist und aus einer unter der Schotterschicht (1) befindlichen Planumsschutzschicht (2) ausgehoben wird.

5. Verfahren nach zumindest einem der Ansprüche 1 bis 4, **wobei** das Verbrennen (B) bei einer Temperatur erfolgt, die in Abhängigkeit eines Flammpunktes des zumindest einen nicht wiederverwendbaren Abfallstoffs eingestellt wird.

6. Verfahren nach zumindest einem der Ansprüche 1 bis 5, **wobei** die Aushubmasse (A) nacheinander und/oder parallel zumindest zwei Aufbereitungsbehandlungen (S) unterzogen wird, die aus der Gruppe ausgewählt sind, die zumindest das Trennen (S1), das Waschen (S2) und das Brechen (S3) umfasst.

7. Verfahren nach zumindest einem der Ansprüche 1 bis 6, **wobei** die aufbereitete Feinfraktion (F') zumindest teilweise der Grobfraktion (G) bei der Wiederverwendung (V) beigemischt wird.

8. Verfahren nach zumindest einem der Ansprüche 1 bis 7, **wobei** das Klassieren (K) durch Sieben erfolgt, und/oder die Korngrößenverteilung der zumindest einen Feinfraktion (F) mit dem zumindest einen nicht wiederverwendbaren Abfallstoff eine Obergrenze der Korngröße von 1 mm aufweist.

9. Aufbereitungsvorrichtung (10), ausgebildet zur Aufbereitung einer Aushubmasse (A) nach einem Verfahren nach zumindest einem der Ansprüche 1 bis 8, wobei die Aushubmasse (A) einen Hauptanteil an Bauschuttmaterial und zumindest einen Nebenanteil an Bodenaushubmaterial und/oder Baumischabfallmaterial aufweist, wobei die Aushubmasse (A) einen nicht wiederverwendbaren Abfallstoff aus einer Gruppe aufweist, die zumindest organische Bodenmaterialien, Leichtbaustoffe und Schadstoffe aufweist,
**dadurch gekennzeichnet, dass**
die Aufbereitungsvorrichtung (10) aufweist:
- zumindest eine Behandlungsvorrichtung (30), die aus einer Gruppe ausgewählt ist, die zumindest eine Trennvorrichtung (31), eine Waschvorrichtung (32) und einen Brechvorrichtung (33) aufweist, wobei durch die zumindest eine Behandlungsvorrichtung (30) eine behandelte Aushubmasse (A`) bereitgestellt wird; und
- eine Klassierungsvorrichtung (40) zur Klassierung der behandelten Aushubmasse (A`) in zumindest eine Grobfraktion (G) und zumindest eine Feinfraktion (F), wobei die Klassierungsvorrichtung (40) zumindest eine Abfuhrvorrichtung (43, 44) für die zumindest eine Grobfraktion (G) aufweist; und
- zumindest eine erste Überführungsvorrichtung (35) von der zumindest einen Aufbereitungsvorrichtung (30) zu der Klassierungsvorrichtung (40); und
- eine Verbrennungsvorrichtung (50), die zur Verbrennung der zumindest einen Feinfraktion (F) ausgelegt ist und zumindest eine Abfuhrvorrichtung (52) für die aufbereitete Feinfraktion (F`) aufweist; und
- zumindest eine zweite Überführungsvorrichtung (45) von der Klassierungsvorrichtung (40) zu der Verbrennungsvorrichtung (50).

10. Aufbereitungsvorrichtung (10) nach Anspruch 9,
**dadurch gekennzeichnet, dass**
die Aufbereitungsvorrichtung (10) eine mobile Aufbereitungsvorrichtung (10) ist, die auf einem Fahrwerk (4) angeordnet ist.

11. Aufbereitungsvorrichtung (10) nach Anspruch 9 oder 10,
**dadurch gekennzeichnet, dass** die Aufbereitungsvorrichtung (10) zumindest zwei aufeinander folgende und/oder parallele Behandlungsvorrichtungen (30) aufweist, die aus der Gruppe ausgewählt sind, die zumindest das Trennen (S1), das Waschen (S2) und das Brechen (S3) aufweist.

12. Aufbereitungsvorrichtung (10) nach zumindest einem der Ansprüche 9 bis 11,
**dadurch gekennzeichnet, dass** die Klassierungsvorrichtung (40) eine Siebvorrichtung (40) mit zumindest einem Siebdeck (41, 42) ist.

13. Aufbereitungsvorrichtung (10) nach zumindest einem der Ansprüche 9 bis 12,
**dadurch gekennzeichnet, dass** die Verbrennungsvorrichtung (50) zumindest eine Vorrichtung (54) zur Abhitzenutzung und/oder Rauchgasreinigung aufweist.

14. Arbeitszug (100), der zur Aufbereitung zumindest einer Aushubmasse (A) auf einem Gleis (3) mit oder zu einer Baustelle verfahrbar ist, wobei der Arbeitszug (100) zumindest einen Arbeitswagen (13, 14) mit zumindest einer Aufbereitungsvorrichtung (10) nach zumindest einem der Ansprüche 9 bis 13 und zumindest eine Fördervorrichtung (18, 19, 20) aufweist, mit der die Aushubmasse (A) der zumindest einen Aufbereitungsvorrichtung (10) zuführbar ist.

15. Arbeitszug (100) nach Anspruch 14, der zur Gleissanierung ausgebildet ist, wobei die zumindest eine Aushubmasse (A) eine Schotteraushubmasse (A1) mit Schotter als Bauschuttmaterial aus einer unter einem Gleis (3) befindlichen Schotterschicht (1) und/oder eine Kiesaushubmasse (A2) mit Kies als Bauschuttmaterial aus einer unter der Schotterschicht (1) befindlichen Planumsschutzschicht (2) umfasst.

## Geänderte Patentansprüche

### Geänderte Patentansprüche gemäss Regel 137(2) EPÜ.

1. Verfahren zur Aufbereitung einer Aushubmasse (A), die einen Hauptanteil aus Bauschuttmaterial und zumindest einen Nebenanteil aus Bodenaushubmaterial und/oder Baumischabfallmaterial aufweist, wobei Aushubmasse (A) zumindest einen nicht wiederverwendbaren Abfallstoff aus einer Gruppe aufweist, die zumindest organische Bodenmaterialien, Leichtbaustoffe und Schadstoffe aufweist, **umfassend die Schritte**
- Durchführen zumindest einer Aufbereitungsbehandlung (S) der Aushubmasse (A), wobei die zumindest eine Aufbereitungsbehandlung (S) zumindest ein Trennen (S1), ein Waschen (S2) oder ein Brechen (S3) umfasst, und Erhalten einer behandelten Aushubmasse (A'), die zumindest zwei Fraktionen (F, G) unterschiedlicher Korngrößenverteilung umfasst, wobei der zumindest eine nicht wiederverwendbaren Abfallstoff in zumindest einer Feinfraktion (F) enthalten ist;
- Klassieren (K) der behandelten Aushubmasse (A') in einer Klassierungsvorrichtung (40) in die zumindest zwei Fraktionen (F, G) unterschiedlicher Korngrößenverteilung, die die zumindest eine Feinfraktion (F) mit dem zumindest einen nicht wiederverwendbaren Abfallstoff und zumindest eine Grobfraktion (G) der behandelten Aushubmasse (A') sind, wobei die Korngrößenverteilung der zumindest einen Feinfraktion (F) mit dem zumindest einen nicht wiederverwendbaren Abfallstoff eine Obergrenze der Korngröße von 1 mm aufweist und die zumindest eine Grobfraktion (G) arm an oder frei von dem zumindest einen nicht wiederverwendbaren Abfallstoff ist;
- Abführen der zumindest einen Grobfraktion (G) zu einer Wiederverwendung (V); und
- Überführen der zumindest einen Feinfraktion (F), die den zumindest einen nicht wiederverwendbaren Abfallstoff und die Korngrößenverteilung mit der Obergrenze der Korngröße von 1 mm aufweist, in eine Verbrennungsvorrichtung (50) und
- Verbrennen (B) des zumindest einen nicht wiederverwendbaren Abfallstoffs der zumindest einen Feinfraktion (F) bei einer Temperatur, die zur Verbrennung des in der zumindest einen Feinfraktion (F) enthaltenen zumindest einen nicht wiederverwendbaren Abfallstoffs ausgewählt ist, und aus einem Verbrennungsrückstand Erhalten einer aufbereiteten Feinfraktion (F'), die arm an oder frei von dem zumindest einen nicht wiederverwendbaren Abfallstoff ist.

2. Verfahren nach Anspruch 1, **umfassend die Schritte**
vor dem Durchführen der zumindest einen Aufbereitungsbehandlung (S) der Aushubmasse (A):
- Bereitstellen einer Aufbereitungsvorrichtung (10), die zumindest eine Behandlungsvorrichtung (30) zur Durchführung der zumindest einen Aufbereitungsbehandlung (S), die Klassierungsvorrichtung (40), eine Verbrennungsvorrichtung (50) und zumindest eine erste Überführungsvorrichtung (35) von der Behandlungsvorrichtung (30) zu der Klassierungsvorrichtung (40) und zumindest eine zweite Überführungsvorrichtung (45) von der Klassierungsvorrichtung (40) zu der Verbrennungsvorrichtung (50) umfasst, als mobile Aufbereitungsvorrichtung (10) durch Anordnen auf einem Fahrwerk (4), und
- Positionieren der mobilen Aufbereitungsvorrichtung (10) an einer Baustelle (60) oder nahe der Baustelle (60), an der die Aushubmasse (A) anfällt.

3. Verfahren nach Anspruch 2, **wobei**
die mobile Aufbereitungsvorrichtung (10) mit dem Fahrwerk (4) zumindest einen Arbeitswagen (13, 14) bildet, der auf einem Gleis (3) zu oder mit der Baustelle (60) bewegt wird.

4. Verfahren nach Anspruch 2 oder 3, **wobei** die Baustelle (60) eine Gleisbaustelle (60) an einer Bahnstrecke ist und die Aushubmasse (A), die aufbereitet wird, eine Schotteraushubmasse (A1), die als Bauschuttmaterial Schotter aufweist und aus einer unter dem Gleis (3) befindlichen Schotterschicht (1) ausgehoben wird, und/oder eine Kiesaushubmasse (A2) ist, die als Bauschuttmaterial Kies aufweist und aus einer unter der Schotterschicht (1) befindlichen Planumsschutzschicht (2) ausgehoben wird.

5. Verfahren nach zumindest einem der Ansprüche 1 bis 4, **wobei** das Verbrennen (B) bei einer Temperatur erfolgt, die in Abhängigkeit eines Flammpunktes des zumindest einen nicht wiederverwendbaren Abfallstoffs eingestellt wird.

6. Verfahren nach zumindest einem der Ansprüche 1 bis 5, **wobei** die Aushubmasse (A) nacheinander und/oder parallel zumindest zwei Aufbereitungsbehandlungen (S) unterzogen wird, die zumindest das Trennen (S1), das Waschen (S2) oder das Brechen (S3) umfasst.

7. Verfahren nach zumindest einem der Ansprüche 1 bis 6, **wobei** die aufbereitete Feinfraktion (F') zumindest teilweise der Grobfraktion (G) bei der Wiederverwendung (V) beigemischt wird.

8. Verfahren nach zumindest einem der Ansprüche 1 bis 7, **wobei** das Klassieren (K) durch Sieben erfolgt.

9. Aufbereitungsvorrichtung (10) zur Ausführung des Verfahrens zur Aufbereitung einer Aushubmasse (A) nach zumindest einem der Ansprüche 1 bis 8, wobei die Aushubmasse (A) einen Hauptanteil an Bauschuttmaterial und zumindest einen Nebenanteil an Bodenaushubmaterial und/oder Baumischabfallmaterial aufweist, wobei die Aushubmasse (A) einen nicht wiederverwendbaren Abfallstoff aus einer Gruppe aufweist, die zumindest organische Bodenmaterialien, Leichtbaustoffe und Schadstoffe aufweist,
**dadurch gekennzeichnet, dass**
die Aufbereitungsvorrichtung (10) aufweist:
- zumindest eine Behandlungsvorrichtung (30), die zumindest eine Trennvorrichtung (31), eine Waschvorrichtung (32) oder einen Brechvorrichtung (33) aufweist, wobei durch die zumindest eine Behandlungsvorrichtung (30) eine behandelte Aushubmasse (A') bereitgestellt wird; und
- eine Klassierungsvorrichtung (40) zur Klassierung der behandelten Aushubmasse (A') in zumindest eine Grobfraktion (G) und zumindest eine Feinfraktion (F), wobei die Klassierungsvorrichtung (40)
dazu ausgebildet ist, dass die Korngrößenverteilung der zumindest einen Feinfraktion (F) mit dem zumindest einen nicht wiederverwendbaren Abfallstoff eine Obergrenze der Korngröße von 1 mm aufweist, und
zumindest eine Abfuhrvorrichtung (43, 44) für die zumindest eine Grobfraktion (G) aufweist; und
- zumindest eine erste Überführungsvorrichtung (35) von der zumindest einen Aufbereitungsvorrichtung (30) zu der Klassierungsvorrichtung (40); und
- eine Verbrennungsvorrichtung (50), die zur Verbrennung der zumindest einen Feinfraktion (F) ausgelegt ist und zumindest eine Abfuhrvorrichtung (52) für die aufbereitete Feinfraktion (F') aufweist; und
- zumindest eine zweite Überführungsvorrichtung (45) von der Klassierungsvorrichtung (40) zu der Verbrennungsvorrichtung (50).

10. Aufbereitungsvorrichtung (10) nach Anspruch 9,
**dadurch gekennzeichnet, dass**
die Aufbereitungsvorrichtung (10) eine mobile Aufbereitungsvorrichtung (10) ist, die auf einem Fahrwerk (4) angeordnet ist.

11. Aufbereitungsvorrichtung (10) nach Anspruch 9 oder 10,
**dadurch gekennzeichnet, dass** die Aufbereitungsvorrichtung (10) zumindest zwei aufeinander folgende und/oder parallele Behandlungsvorrichtungen (30) aufweist, die zumindest das Trennen (S1), das Waschen (S2) oder das Brechen (S3) aufweist.

12. Aufbereitungsvorrichtung (10) nach zumindest einem der Ansprüche 9 bis 11,
**dadurch gekennzeichnet, dass** die Klassierungsvorrichtung (40) eine Siebvorrichtung (40) mit zumindest einem Siebdeck (41, 42) ist.

13. Aufbereitungsvorrichtung (10) nach zumindest einem der Ansprüche 9 bis 12,
**dadurch gekennzeichnet, dass** die Verbrennungsvorrichtung (50) zumindest eine Vorrichtung (54) zur Abhitzenutzung und/oder Rauchgasreinigung aufweist.

14. Arbeitszug (100), der zur Aufbereitung zumindest einer Aushubmasse (A) auf einem Gleis (3) mit oder zu einer Baustelle verfahrbar ist, wobei der Arbeitszug (100) zumindest einen Arbeitswagen (13, 14) mit zumindest einer Aufbereitungsvorrichtung (10) nach zumindest einem der Ansprüche 9 bis 13 und zumindest eine Fördervorrichtung (18, 19, 20) aufweist, mit der die Aushubmasse (A) der zumindest einen Aufbereitungsvorrichtung (10) zuführbar ist.

15. Arbeitszug (100) nach Anspruch 14, der zur Gleissanierung ausgebildet ist, wobei die zumindest eine Aushubmasse (A) eine Schotteraushubmasse (A1) mit Schotter als Bauschuttmaterial aus einer unter einem Gleis (3) befindlichen Schotterschicht (1) und/oder eine Kiesaushubmasse (A2) mit Kies als Bauschuttmaterial aus einer unter der Schotterschicht (1) befindlichen Planumsschutzschicht (2) umfasst.
